# EUROPEAN PATENT SPECIFICATION

(11) **EP 4 112 436 B1**
(45) Date of publication and mention of the grant of the patent: **13.03.2024**
(21) Application number: 22181547.5
(22) Date of filing: 28.06.2022
(51) Int. Cl.: B63B 1/38

(54) **CONTROLLER, METHOD FOR CONTROLLING CONTROLLER, PROGRAM FOR CONTROLLING CONTROLLER**
STEUERUNG, VERFAHREN ZUM STEUERN EINER STEUERUNG, PROGRAMM ZUM STEUERN EINER STEUERUNG
DISPOSITIF DE COMMANDE, PROCÉDÉ DE COMMANDE DU DISPOSITIF DE COMMANDE, PROGRAMME DE COMMANDE DU DISPOSITIF DE COMMANDE

(30) Priority: 28.06.2021 JP 2021106893
(43) Date of publication of application: 04.01.2023
(73) Proprietor: Nabtesco Corporation, Tokyo 102-0093 (JP)
(72) Inventor: Kawatani, Toru, Tokyo (JP); Kawasaki, Naoyuki, Tokyo (JP); Majima, Junpei, Tokyo (JP); Fujimura, Tatsuya, Tokyo (JP); Choho, Hiroshi, Tokyo (JP); Takezono, Koichi, Tokyo (JP); Hirose, Kyohei, Tokyo (JP)
(74) Representative: Grünecker Patent- und Rechtsanwälte PartG mbB

(56) References cited:
- JP-A- 2013 230 814
- US-A1- 2011 259 440

## Description

The present invention relates to a controller, a method for controlling the controller, and a program for controlling the controller.

A vessel having an air lubrication mechanism for providing an air layer on a vessel bottom is known. For example, JP 2012-056328 A describes a vessel including an air lubrication mechanism that blows out air from the vessel bottom. This vessel includes an air blower that blows out air from the vessel bottom, and a suppressor that suppresses a relative reduction in thickness of an air layer covering a predetermined region of the vessel bottom. The air blower includes air blowout ports in a central region, a port-side region, and a starboard-side region of the vessel bottom.

JP 2013 230814 A relates to an air lubrication system of a vessel equipped with a supercharger diesel engine, wherein air extracted from around the supercharger is used for producing the bubbles under the vessel. Bubble ejection may be started/stopped depending on the operating state of the engine. The ejection of air bubbles may be started when the vessel accelerates.

US 2011/259440 A1 relates to a system for reducing frictional forces for a vessel by ejecting bubbles on a bottom of the vessel, wherein exhaust gas of an engine may be ejected as the bubbles. The amount of exhaust gas may be controlled based on characteristics of the engine like its heat load.

The invention is defined by the independent claims. The dependent claims describe advantageous embodiments.

The present inventor has obtained the below-described recognition regarding an air lubrication mechanism that supplies air to the vessel bottom of the hull. The air lubrication mechanism exerts an effect of reducing frictional resistance (hereinafter, simply referred to as "frictional resistance") between water and the hull by ejecting bubbles to the vessel bottom (hereinafter referred to as "air lubrication effect"). By this air lubrication effect, the energy consumption of a propulsion mechanism for propelling the hull (hereinafter, simply referred to as "propulsion mechanism") can be reduced. However, since the air lubrication mechanism consumes energy for ejecting air during operation, the energy consumed by the air lubrication mechanism may exceed the energy reduced by the propulsion mechanism when the air lubrication mechanism is continuously operated. Therefore, it is desirable to operate the air lubrication mechanism when the air lubrication effect is appropriately exerted in consideration of the balance between the energy consumed by the air lubrication mechanism and the energy reduced by the air lubrication effect.

For example, it is conceivable to activate/stop the air lubrication mechanism by the determination of the operator. However, in this case, since the determination is complicated and not easy, the air lubrication effect cannot always be appropriately exerted.

In addition, the vessel described in JP 2012-056328 A does not take sufficient measures from the viewpoint of appropriately exerting the air lubrication effect.

The present invention has been made in view of such problems, and an object is to provide a technique of a controller capable of appropriately exerting the air lubrication effect for reducing the frictional resistance.

In order to solve the above problems, the controller according to an aspect of the present invention includes: a bubble control unit that controls an ejection mechanism that ejects bubbles into water through an air outlet provided in a hull of a vessel and a propulsion control unit that controls a propulsion force of a propulsion mechanism that propels the hull. One of the propulsion control unit and the bubble control unit is controlled according to the control of the other.

According to this aspect, the ejection mechanism and the propulsion mechanism can be controlled in cooperation.

Another embodiment of the present invention is a method for controlling a controller. This method includes a step of controlling one of an ejection mechanism and a propulsion mechanism according to the control of the other in the controller that controls the ejection mechanism that ejects bubbles into the water through an air outlet provided in a hull of a vessel and the propulsion mechanism that propels the hull.

According to this aspect, the ejection mechanism and the propulsion mechanism can be controlled in cooperation.

Still another embodiment of the present invention is a program for controlling a controller. This program causes the controller to execute the foregoing method.

According to this aspect, the ejection mechanism and the propulsion mechanism can be controlled in cooperation.

According to the present invention, it is possible to provide a technique of a controller capable of appropriately exerting the air lubrication effect for reducing the frictional resistance.

### BRIEF DESCRIPTION OF THE DRAWINGS

FIG. 1 is a diagram schematically illustrating a vessel to which a controller according to the present invention is applied;
FIG. 2 is a block diagram schematically illustrating a controller according to a first embodiment of the present invention;
FIG. 3 is a flowchart illustrating an example of operation of the controller of FIG. 2;
FIG. 4 is a block diagram schematically illustrating a controller according to a second embodiment of the present invention;
FIG. 5 is a flowchart illustrating an example of operation of the controller of FIG. 4;
FIG. 6 is a block diagram schematically illustrating a controller according to a third embodiment of the present invention;
FIG. 7 is a flowchart illustrating an example of operation of the controller of FIG. 6;
FIG. 8 is a block diagram schematically illustrating a controller according to a fourth embodiment of the present invention;
FIG. 9 is a flowchart illustrating an example of operation of the controller of FIG. 8;
FIG. 10 is a block diagram schematically illustrating a controller according to a fifth embodiment of the present invention;
FIG. 11 is a flowchart illustrating an example of operation of the controller of FIG. 10;
FIG. 12 is a block diagram schematically illustrating a controller according to a sixth embodiment of the present invention;
FIG. 13 is a diagram illustrating an example of a table of handle position and target rotation rate of the controller of FIG. 12; and
FIG. 14 is a flowchart illustrating an example of operation of the controller of FIG. 12.

### DETAILED DESCRIPTION OF THE INVENTION

Hereinafter, the present invention will be described on the basis of preferred embodiments with reference to the drawings. In embodiments and modified examples, the same or equivalent components and members are denoted by the same reference numerals, and redundant description is omitted as appropriate. In addition, the dimensions of the members in each drawing are appropriately enlarged and reduced for the sake of easy understanding. In addition, in each drawing, some of the members that are not important for describing the embodiments are omitted.

In addition, different components having a common point are distinguished by adding "first and second" or the like to the beginning of the names, and these are omitted when the components are collectively referred to. In addition, terms including ordinal numbers such as first and second are used to describe various components, but the terms are used only for the purpose of distinguishing one component from other components, and the components are not limited by the terms.

In the present specification, a case where the energy reduced by air lubrication exceeds the energy required for air lubrication is referred to as "good" or "plus" energy balance, and a case where the energy required for air lubrication exceeds the energy reduced by air lubrication is referred to as "bad" or "minus" energy balance. In addition, when the energy balance is good, it is described that the air lubrication effect is appropriately exerted. In addition, improvement in energy balance is referred to as "improvement".

In the present specification, the vessel speed of the hull through water is simply referred to as "vessel speed", and the current draft of the hull is simply referred to as "draft".

Among the embodiments disclosed in the present specification, a configuration including a plurality of objects may integrate the plurality of objects, and conversely, a configuration including one object can be divided into a plurality of objects. It is sufficient if the objects are configured to achieve the object of the invention regardless of whether or not they are integrated.

Among the embodiments disclosed in the present specification, those in which a plurality of functions is provided in a distributed manner may be provided by aggregating some or all of the plurality of functions, and conversely, those in which a plurality of functions is provided in an aggregated manner may be provided so that some or all of the plurality of functions are distributed. It is sufficient if the functions are configured to achieve the object of the invention regardless of whether or not they are aggregated or distributed.

### First Embodiment

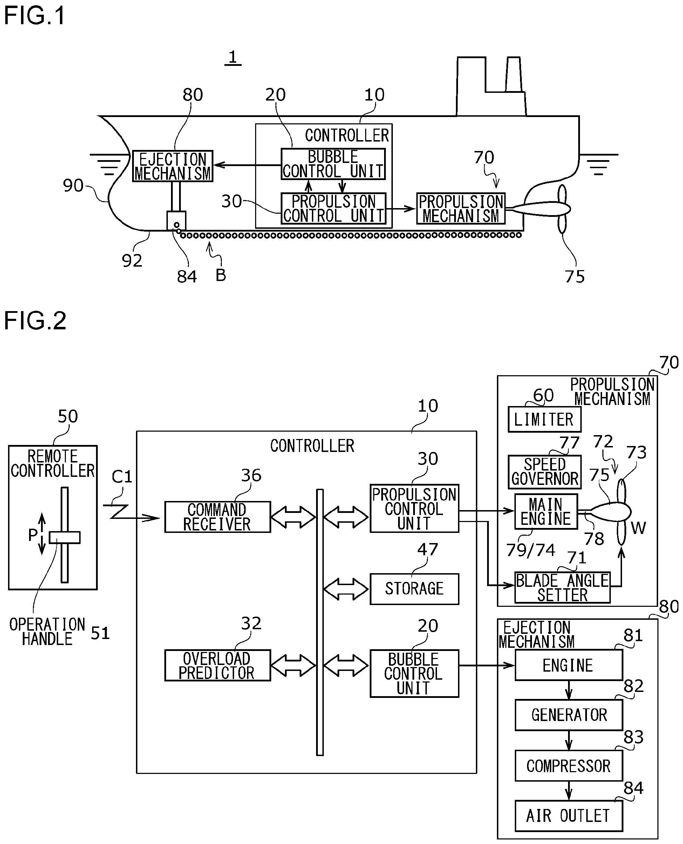

Hereinafter, a controller 10 according to the first embodiment of the present invention will be described with reference to the drawings. FIG. 1 is a diagram schematically illustrating a vessel 1 to which the controller 10 according to the present invention is applied. In the present embodiment, the vessel 1 includes a hull 90, the controller 10, a propulsion mechanism 70, and an ejection mechanism 80. The propulsion mechanism 70 is a mechanism that generates a propulsion force for propelling the hull 90. The ejection mechanism 80 constitutes the air lubrication mechanism that generates the air lubrication effect for reducing the frictional resistance by ejecting bubbles B from an air outlet 84 provided, for example, in a vessel bottom 92 of the hull 90. Hereinafter, the time when the ejection mechanism 80 ejects air may be referred to as "ejection time", and the time when not ejecting air may be referred to as "non-ejection time".

FIG. 2 is a block diagram schematically illustrating the controller 10 of the present embodiment. Each block illustrated in FIG. 2 and block diagrams to be described below can be realized by elements including a processor, a CPU, and memory of a computer, an electronic circuit, and a mechanical device in terms of hardware, and is realized by a computer program or the like in terms of software, but here, functional blocks realized by cooperation of these are illustrated. Therefore, it is understood by those skilled in the art that these functional blocks can be realized in various forms by a combination of hardware and software.

The controller 10 includes a bubble control unit 20, a propulsion control unit 30, a command receiver 36, an overload predictor 32, and a storage 47. The bubble control unit 20 controls the ejection mechanism 80 that ejects the bubbles B through the air outlet 84 provided in the vessel bottom 92 of the hull 90. The propulsion mechanism 70 generates a propulsion force for propelling the hull 90. The command receiver 36 receives a command signal that commands the magnitude of the propulsion force of the propulsion mechanism 70 and an actual signal indicating the current magnitude of the propulsion force. The propulsion control unit 30 controls the propulsion force of the propulsion mechanism 70 on the basis of a comparison result between the command signal and the actual signal received by the command receiver 36. The storage 47 stores each input information to be described below in time series, and stores each reference value and each threshold value to be described below. The overload predictor 32 will be described below.

In the controller 10, one of the propulsion control unit 30 and the bubble control unit 20 is controlled according to the control of the other. With this configuration, since the ejection mechanism 80 and the propulsion mechanism 70 are controlled to cooperate with each other, the energy balance of the hull 90 can be improved. In the present embodiment, the bubble control unit 20 controls the ejection mechanism 80 according to the control of the propulsion control unit 30. In this case, the energy balance can be improved by controlling the bubble control unit 20 according to the situation of the propulsion control unit 30.

### Propulsion Mechanism

The propulsion mechanism 70 may be any mechanism as long as it can propel the hull 90, and, in the present embodiment, a diesel engine (hereinafter, referred to as "main engine 74") is provided as a prime mover 79, and a propeller 75 is rotated by the main engine 74 to obtain a propulsion force. The propulsion mechanism 70 consumes an amount of fuel corresponding to the rotation rate and torque of the main engine 74 in order to operate the main engine 74. The propulsion mechanism 70 includes a speed governor 77 that suppresses a variation in the rotation rate of the main engine 74. The speed governor 77 is also referred to as a governor, and when the rotation rate of the main engine 74 changes with respect to the load variation, the speed governor 77 adjusts the fuel supply amount so as to alleviate the change.

### Propulsion control unit

The propulsion control unit 30 controls the main engine 74. The propulsion control unit 30 of the present embodiment controls increasing or reducing the rotation rate of the main engine 74, stopping the main engine 74, or the like on the basis of an operation input of an operation device (hereinafter referred to as a "remote controller 50") that remotely operates the main engine installed in the bridge or the like of the vessel 1. The remote controller 50 includes an operation handle 51 as an operation unit that commands the magnitude of the propulsion force of the propulsion mechanism 70. The remote controller 50 transmits a command signal C1 for commanding the magnitude of the propulsion force to the controller 10 in accordance with the position (hereinafter, referred to as "handle position P") of the operation handle 51. The handle position P exemplifies an operation state of the operation unit.

The form of the operation handle 51 is not limited as long as the operator can input an operation to the operation device. For example, the operation handle 51 may or may not include a movable operation unit. For example, the operation handle 51 may detect a command from a touch position of a touch panel.

The controller 10 of the present embodiment includes the command receiver 36 that receives the command signal C1. The propulsion control unit 30 changes the propulsion force of the propulsion mechanism 70 on the basis of the command signal C1 received by the command receiver 36. By changing the position of the operation handle 51 of the remote controller 50, the operator can change the propulsion force of the propulsion mechanism 70 within a predetermined range including zero, forward movement, and backward movement.

### Ejection Mechanism

The ejection mechanism 80 is a mechanism that ejects the bubbles B into water through the air outlet 84 provided in the vessel bottom 92 during navigation. Since a part of the vessel bottom 92 is covered with the air layer formed by the bubbles B ejected through the air outlet 84, the frictional resistance of the hull 90 is reduced. The ejection mechanism 80 of the present embodiment includes an engine 81 for driving a generator 82 and a compressor 83 driven by the power generated by the generator 82.

### Bubble Control Unit

The bubble control unit 20 controls the ejection mechanism 80 to a state in which the engine 81, the generator 82, and the compressor 83 are operated to eject the bubbles B and a state in which the engine 81 is stopped to not eject the bubbles B. The ejection mechanism 80 consumes a predetermined amount of fuel to operate the engine 81 at the ejection time.

It is desirable that the hull can be smoothly accelerated and decelerated. Therefore, the bubble control unit 20 of the present embodiment increases the ejection amount of the bubbles B when the command signal C1 indicates speed increase. In the present specification, increasing the ejection amount of the bubbles B includes starting ejection of the bubbles B. In this case, the air lubrication effect is increased and acceleration is smoothly achieved by the increase or start of the bubbles B, and the time to reach the target speed can be shortened. In addition, when the command signal C1 indicates deceleration, the bubble control unit 20 reduces the ejection amount of the bubbles B. In the present specification, reducing the ejection amount of the bubbles B includes stopping the ejection of the bubbles B. In this case, the air lubrication effect is reduced by reduction or stop of the bubbles B, and the time to reach the target speed can be shortened.

In the present embodiment, the propulsion mechanism 70 includes the main engine 74 that rotates the propeller 75. The configuration of the propeller 75 is not limited, and may be, for example, a fixed pitch propeller or a variable pitch propeller. The propeller 75 in this example is a variable pitch propeller 72 that changes a blade angle W of a propeller blade 73 in accordance with a blade angle command from the propulsion control unit 30. The variable pitch propeller 72 includes a blade angle setter 71 that changes the blade angle W according to the control of the propulsion control unit 30. The blade angle setter 71 detects a current actual blade angle (hereinafter referred to as "actual blade angle W2"), performs feedback control using the actual blade angle W2, and realizes the blade angle W according to the blade angle command (hereinafter referred to as "target blade angle W1").

In the case of having the variable pitch propeller 72, the propulsion force of the propulsion mechanism 70 can be changed by changing the blade angle W while the main engine 74 is operated at a constant rotation rate. In the case of operation at a rotation rate at which fuel consumption is relatively small, the fuel consumption amount of the main engine 74 can be saved.

In the propulsion control unit 30 of this example, the relationship between the rotation rate command (hereinafter, referred to as "target rotation rate N1") of the main engine 74 and the blade angle command of the propeller blade 73 corresponding to the handle position P of the operation handle 51 of the remote controller 50 is set in advance as a combinator curve. In the combinator curve, as an example, the relationship between each handle position P of the operation handle 51, the target rotation rate N1, and the target blade angle W1 is defined such that the target rotation rate N1 = 80 rpm and the target blade angle W1 = 0 deg when the handle position P is STOP, and the target rotation rate N1 = 120 rpm and the target blade angle W1 = 25 deg when the handle position P is N/FMAX.

In addition, the propulsion control unit 30 also includes control for changing the target blade angle W1 at a preset speed (hereinafter, referred to as "CPP blade angle change speed") even when the handle is rapidly operated in order to alleviate the influence of a rapid change in blade angle.

The propulsion mechanism 70 includes a limiter 60 that performs limiter control to protect the main engine 74. The limiter 60 may include a limiter mechanism based on various principles. In the present embodiment, the limiter 60 includes an ALC limiter 69 that performs limiter control to protect the main engine 74 from overload. The ALC limiter 69 reduces the blade angle of the propeller blade 73 when the current actual load (hereinafter referred to as "actual load") of the main engine 74 exceeds a preset target load.

The ALC limiter 69 of the present embodiment compares the target load and the actual load of the main engine 74, and executes control (hereinafter, referred to as "automatic load control (ALC) control") to reduce the blade angle of the propeller blade 73 when the actual load is higher than the target load (hereinafter, referred to as "overload state"). The ALC control reduces the blade angle to prevent the main engine 74 from being overloaded.

The overload predictor 32 predicts whether the main engine 74 exceeds a predetermined load. In this example, the command signal is a signal that commands the target rotation rate N1 of the main engine 74, and the actual signal is an actual rotation rate N2, which is the current rotation rate (hereinafter, referred to as "actual rotation rate N2") of the main engine 74. In the present embodiment, the overload predictor 32 monitors the load of the main engine 74 in the load state before the ALC limiter 69 operates. In particular, the overload predictor 32 predicts whether the main engine 74 exceeds the predetermined load according to the target rotation rate N1 of the main engine 74, the actual rotation rate N2 of the main engine 74, and a current fuel input amount (hereinafter, referred to as "fuel input amount S2") of the main engine 74.

In the present embodiment, the bubble control unit 20 performs control as described below according to the prediction result of the overload predictor 32. The bubble control unit 20 increases the ejection amount of the bubbles B when it is predicted that the load exceeds the predetermined load. That is, the overload predictor 32 and the bubble control unit 20 increase the air lubrication effect in the load state before the ALC limiter 69 operates. In this case, the load of the main engine 74 can be prevented from exceeding the predetermined load. In addition, the bubble control unit 20 maintains the ejection state of the bubbles B when it is predicted that the load does not exceed the predetermined load.

Next, an example in which the command signal is the target blade angle W1 of the variable pitch propeller 72 and the actual signal is the actual blade angle W2 of the variable pitch propeller 72 will be described. The overload predictor 32 of the present embodiment predicts whether the main engine 74 exceeds the predetermined load further on the basis of the target blade angle W1 and the actual blade angle W2 of the variable pitch propeller 72. In this case, in the vessel having the variable pitch propeller 72, it is possible to prevent the load of the main engine 74 from exceeding the predetermined load. For example, the overload predictor 32 can predict the load status of the main engine 74 from the combinator curve. As a result, it is possible to reduce the case where the ALC control of the ALC limiter 69 reduces the blade angle and reduces the vessel speed.

The prediction accuracy is desirably high. Therefore, the overload predictor 32 of the present embodiment may predict whether the main engine 74 exceeds the predetermined load further on the basis of at least one of the target value of the speed for changing the blade angle and the target value of the speed for changing the rotation rate of the main engine 74 set in advance. The target value of the speed for changing the blade angle and the target value of the speed for changing the rotation rate of the main engine 74 may be collectively referred to as "change speed setting". In this case, it is possible to more accurately predict that the load of the main engine 74 exceeds the predetermined load.

For example, the target value of the speed for changing the CPP blade angle is set in advance, and the blade angle setter 71 outputs a blade angle command according to the target value. The overload predictor 32 predicts whether the predetermined load of the main engine 74 is exceeded on the basis of the target blade angle, the actual blade angle, and the target value of the speed for changing the CPP blade angle. As a result, the ALC control of the ALC limiter 69 can suppress the reduction in the blade angle and the reduction in the vessel speed. In another example, the target value of the speed for changing the rotation rate of the main engine 74 is set in advance, and the propulsion control unit 30 outputs the rotation rate command according to the target value. The overload predictor 32 predicts whether or not the predetermined load of the main engine 74 is exceeded on the basis of the target rotation rate N1, the actual rotation rate N2, and the target value of the speed for changing the rotation rate of the main engine 74.

By providing the overload predictor 32, the ejection amount of the bubbles B can be increased at an optimum timing, and the vessel speed can be smoothly increased while avoiding overload of the main engine 74.

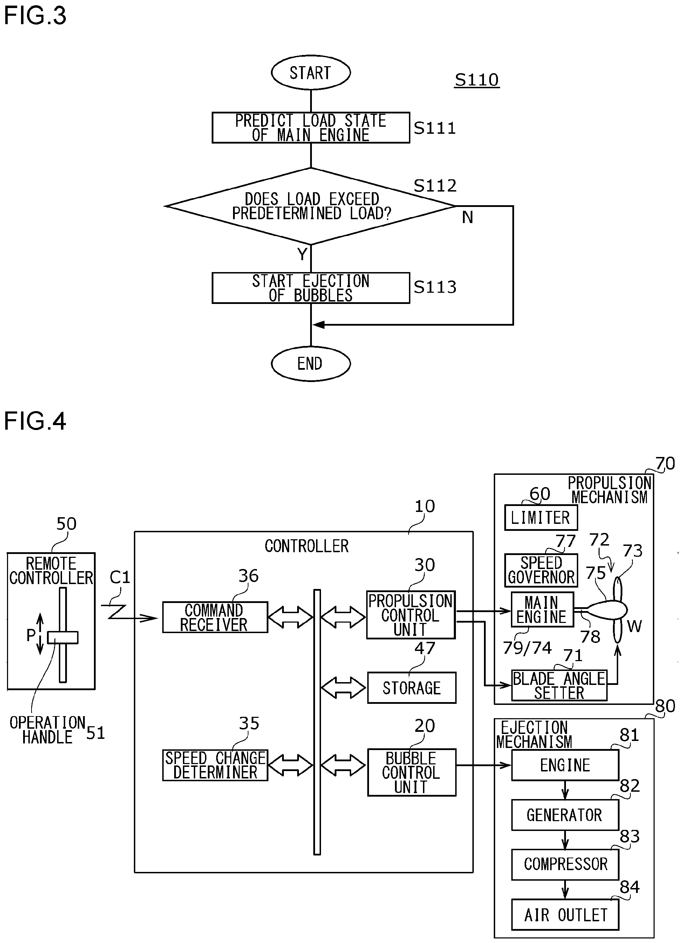

Operation S110 of the controller 10 of the present embodiment configured as described above will be described. FIG. 3 is a flowchart illustrating the operation S110 of the controller 10.

When the operator operates the handle position P of the operation handle 51 of the remote controller 50 to the speed increase side, the propulsion control unit 30 increases the target rotation rate N1 of the main engine 74 or increases the target blade angle W1 of the variable pitch propeller 72 according to the combinator curve. Thus, the propulsion force of the propulsion mechanism 70 increases, and the load of the main engine 74 increases.

Here, when the operation S110 is started, the overload predictor 32 predicts the load status of the main engine 74 on the basis of the combinator curve (Step S111). In this step, the overload predictor 32 predicts the load status of the main engine 74 from the changing speed of the load due to the CPP blade angle change speed setting in addition to the combinator curve.

The bubble control unit 20 determines whether the load of the main engine 74 exceeds the predetermined load on the basis of the prediction result of the overload predictor 32 (Step S112). When it is determined that the load of the main engine 74 does not exceed the predetermined load (N in Step S112), the controller 10 ends the operation S110.

When it is determined that the load of the main engine 74 exceeds the predetermined load (Y in Step S112), the bubble control unit 20 activates the ejection mechanism 80 to start ejection of the bubbles B, and increases the ejection amount of the bubbles B when the ejection mechanism 80 has already been activated (Step S113). As a result, the air lubrication effect is enhanced by the action of the bubbles B, and the hull 90 is smoothly accelerated.

After Step S113 is executed, S110 ends. Each step described above is merely an example, and various modifications can be made.

Features of the controller 10 of the present embodiment will be described. The controller 10 includes the bubble control unit 20 that controls the ejection mechanism 80 that ejects the bubbles into the water through the air outlet 84 provided in the hull 90 of the vessel 1 and the propulsion control unit 30 that controls the propulsion force of the propulsion mechanism 70 that propels the hull 90. One of the propulsion control unit 30 and the bubble control unit 20 is controlled according to the control of the other.

With this configuration, since the ejection mechanism 80 and the propulsion mechanism 70 are controlled in cooperation with each other, the air lubrication effect can be appropriately exerted.

In the present embodiment, the bubble control unit 20 controls the ejection mechanism 80 according to the control of the propulsion control unit 30. In this case, the air lubrication effect can be exerted when appropriate according to the control of the propulsion control unit 30.

The present embodiment includes the command receiver 36 that receives a command signal that commands the magnitude of the propulsion force of the propulsion mechanism 70 and an actual signal indicating the current magnitude of the propulsion force. In the present embodiment, the propulsion control unit 30 controls the propulsion force of the propulsion mechanism 70 on the basis of the comparison result between the command signal and the actual signal, and the bubble control unit 20 increases the ejection amount of the bubbles when the command signal indicates speed increase, or reduces the ejection amount of the bubbles when the command signal indicates speed reduction. In this case, the time to reach the target speed can be shortened.

In the present embodiment, the propulsion mechanism 70 includes the main engine 74 that rotates the propeller 75, the command signal is a signal that commands the target rotation rate N1 of the main engine, and the actual signal is the actual rotation rate N2, which is the current rotation rate of the main engine. The present embodiment includes the overload predictor 32 that predicts whether the load of the main engine 74 exceeds the predetermined load according to the target rotation rate of the main engine 74, the actual rotation rate of the main engine 74, and the current fuel input amount of the main engine 74. The bubble control unit 20 increases the ejection amount of the bubbles when the overload predictor 32 predicts that the predetermined load is exceeded. In this case, the load of the main engine 74 can be suppressed to equal to or less than the predetermined load.

In the present embodiment, the propeller 75 is the variable pitch propeller 72 capable of changing the blade angle of the propeller blade 73, the command signal is the target blade angle W1 of the variable pitch propeller 72, and the actual signal is the actual blade angle W2, which is the current blade angle of the variable pitch propeller 72. In addition, the overload predictor 32 predicts whether the load of the main engine 74 exceeds the predetermined load further on the basis of the target blade angle and the actual blade angle of the variable pitch propeller 72. As a result, when the variable pitch propeller 72 is provided, the load of the main engine 74 can be suppressed to equal to or less than the predetermined load.

In the present embodiment, the overload predictor 32 predicts whether the load of the main engine 74 exceeds the predetermined load further on the basis of at least one of the target value of the speed for changing the blade angle from the actual blade angle to the target blade angle and the target value of the speed for changing the rotation rate of the main engine from the actual rotation rate to the target rotation rate. In this case, the prediction accuracy of the load of the main engine 74 can be improved.

The above is the description of the first embodiment.

Hereinafter, the second to eighth embodiments of the present invention will be described. In the drawings and description of the second to eighth embodiments, the same or equivalent components and members as those of the first embodiment are denoted by the same reference numerals. The description overlapping with that of the first embodiment will be omitted as appropriate, and the configuration different from that of the first embodiment will be mainly described.

### Second Embodiment

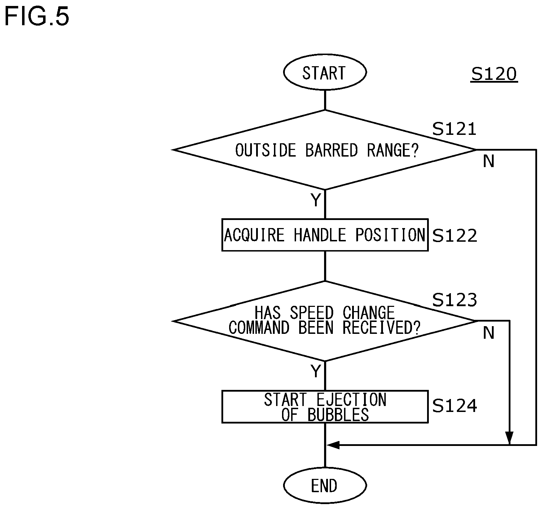

Hereinafter, a controller 10 according to the second embodiment of the present invention will be described with reference to FIGS. 4 and 5. FIG. 4 is a block diagram schematically illustrating the controller 10 of the present embodiment. The controller 10 of the present embodiment includes a bubble control unit 20, a propulsion control unit 30, a command receiver 36, a speed change determiner 35, and a storage 47. Since the present embodiment is different from the first embodiment in that the speed change determiner 35 is provided, the speed change determiner 35 will be mainly described.

Torsional vibration stress is applied to a propulsion shaft 78 that transmits the rotation of a prime mover 79 (a main engine 74 in this example) to a propeller 75. The torsional stress generated in the propulsion shaft 78 varies in synchronization with the rotation of the main engine 74, and the propulsion shaft 78 has a natural frequency for each vibration mode. Therefore, when the rotation of the main engine 74 coincides with the natural frequency of the propulsion shaft 78, the torsional stress increases and may exceed the allowable range of the propulsion shaft 78. Therefore, in the present embodiment, the rotation rate range (hereinafter referred to as "barred range") of the main engine 74 in which the torsional stress of the propulsion shaft 78 increases is set in advance, and the controller 10 performs control to shorten the barred range passage time at the time of acceleration. In particular, the controller 10 activates an ejection mechanism 80 via the bubble control unit 20 to increase the ejection amount of bubbles B when the speed is accelerated from the low speed and equal to or less than the barred range. As a result, the air lubrication effect is enhanced, a hull 90 is smoothly accelerated, and the barred range passage time can be shortened.

The speed change determiner 35 determines whether a speed change command to fall within the barred range (hereinafter, referred to as "speed change command") has been received when a current actual rotation rate N2 of the main engine 74 is outside the barred range. In particular, the speed change command is a command for changing the speed from the actual rotation rate N2 to exceed the barred range to a target rotation rate N1 different from the actual rotation rate N2. When the speed change determiner 35 determines that a speed change command has been received, the bubble control unit 20 increases the ejection amount of the bubbles B. In this case, the barred range passage time can be shortened. In the present embodiment, the speed change determiner 35 determines whether a speed change command has been received on the basis of a handle position P of a remote controller 50. In this case, the speed change determination can be executed earlier.

Operation S120 of the controller 10 of the present embodiment configured as described above will be described. FIG. 5 is a flowchart illustrating the operation S120 of the controller 10.

When the operation S120 is started, the speed change determiner 35 acquires the current actual rotation rate N2 and determines whether the actual rotation rate N2 is outside the barred range (Step S121). When the actual rotation rate N2 is not outside the barred range (N in Step S121), the controller 10 ends the operation S120.

When the actual rotation rate N2 is outside the barred range (Y in Step S121), the controller 10 acquires the handle position P via the command receiver 36 (Step S122). After executing Step S122, the speed change determiner 35 specifies the target rotation rate N1 on the basis of the acquired handle position P and determines whether a speed change command to fall within the barred range has been received (Step S123). When the speed change command is not received (N in Step S123), the controller 10 ends the operation S120.

When it is determined that the speed change command has been received (Y in Step S123), the bubble control unit 20 increases the ejection amount of the bubbles B (Step S124). In this step, when the ejection mechanism 80 is not activated, the ejection mechanism 80 is activated to eject the bubbles B, and when the ejection mechanism 80 is already activated, the ejection amount of the bubbles B is increased.

After Step S124 is executed, S120 ends. Each step described above is merely an example, and various modifications can be made.

When the vessel 1 is decelerated, in a state where the frictional resistance is low while the bubbles B are ejected, it takes time to decelerate, and thus the barred range passage time becomes long. Therefore, the controller 10 of the present embodiment performs control to reduce the ejection amount of the bubbles B when receiving a deceleration command aiming at a lower speed than the barred range when the current actual rotation rate N2 of the main engine 74 is equal to or higher than the barred range. In this case, by reducing the ejection amount of the bubbles B, the frictional resistance can be increased for smooth deceleration, and the barred range passage time can be shortened.

Features of the controller 10 of the present embodiment will be described. In the present embodiment, the propulsion mechanism 70 includes the prime mover 79 that rotates the propeller 75. In addition, the present embodiment further includes the speed change determiner 35 that determines whether a speed change command for falling within the barred range has been received when the current actual rotation rate of the prime mover 79 is outside a preset rotation rate range (barred range). When the speed change determiner 35 determines that a speed change command for falling within the barred range has been received, the bubble control unit 20 increases the ejection amount of the bubbles. In this case, the barred range passage time can be shortened.

In the present embodiment, the speed change determiner 35 determines whether a speed change command for falling within the barred range has been received on the basis of an operation state of an operation unit that remotely operates the prime mover 79. In this case, the speed change determination can be executed earlier.

The above is the description of the second embodiment.

### Third Embodiment

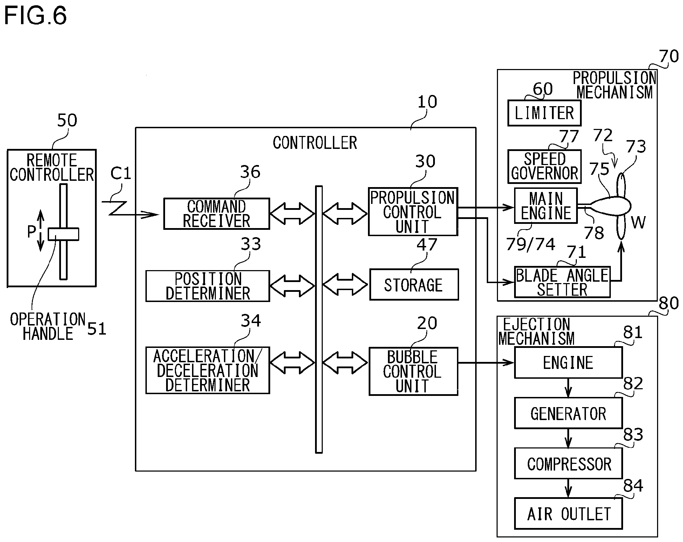

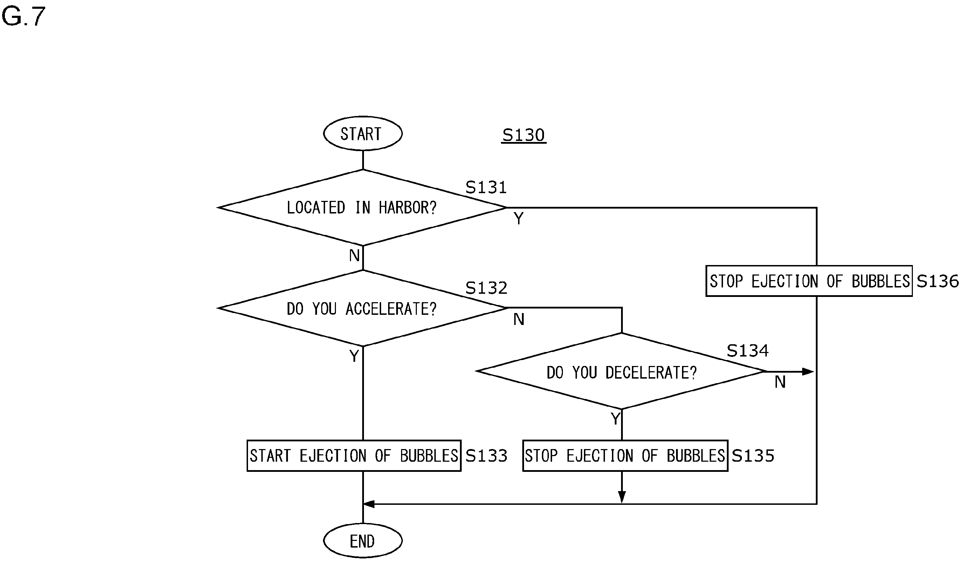

Hereinafter, a controller 10 according to the third embodiment of the present invention will be described with reference to FIGS. 6 and 7. FIG. 6 is a block diagram schematically illustrating the controller 10 of the present embodiment. The controller 10 of the present embodiment includes a bubble control unit 20, a propulsion control unit 30, a command receiver 36, a position determiner 33, an acceleration/deceleration determiner 34, and a storage 47. Since the present embodiment is different from the first embodiment in that the position determiner 33 and the acceleration/deceleration determiner 34 are provided, the position determiner 33 and the acceleration/deceleration determiner 34 will be mainly described.

The acceleration/deceleration determiner 34 determines whether to accelerate or decelerate a hull 90 on the basis of at least one of the fuel input amount to a main engine 74 and an actual rotation rate. The bubble control unit 20 executes at least one of a first operation of increasing the ejection amount of bubbles B when acceleration is determined by the acceleration/deceleration determiner 34 and a second operation of reducing the ejection amount of the bubbles B when deceleration is determined by the acceleration/deceleration determiner 34. In this case, the time to reach the target speed can be shortened.

In many cases, a vessel 1 navigates at a low speed in a harbor. Since the air lubrication effect is reduced in navigation at a low speed, the air lubrication effect with respect to the fuel consumption amount of an ejection mechanism 80 is reduced, which is not efficient. Therefore, the controller 10 of the present embodiment controls to reduce the ejection amount of the bubbles B when the vessel 1 is located in a harbor.

In the present embodiment, the position determiner 33 determines whether the vessel 1 is located in a harbor on the basis of a position signal indicating the position of the vessel 1. The bubble control unit 20 increases the ejection amount of the bubbles B when the position determiner 33 determines that the vessel 1 is located outside the harbor (not inside the harbor). In this case, smooth acceleration is possible outside the harbor. In addition, the bubble control unit 20 reduces the ejection amount of the bubbles B when the position determiner 33 determines that the vessel 1 is located in a harbor. In this case, it is possible to avoid using less effective air lubrication and to improve energy efficiency in the harbor.

The position determiner 33 can determine whether the vessel 1 is located in a harbor on the basis of a handle position P of a remote controller 50. For example, when the handle position P is a position of an operation to the outside of a harbor area (hereinafter, referred to as a "sailing area"), the position determiner 33 can determine that the vessel 1 is located in a harbor. In addition, the position determiner 33 can acquire the position of the vessel 1 using a known positioning system. Examples of such a positioning system include a satellite positioning system such as a global positioning system (GPS) and a positioning system using a gyro sensor or the like.

Operation S130 of the controller 10 of the present embodiment configured as described above will be described. FIG. 7 is a flowchart illustrating the operation S130 of the controller 10.

When the operation S130 is started, the position determiner 33 determines whether the vessel 1 is located in a harbor on the basis of a position signal indicating the position of the vessel 1 (Step S131). When it is determined that the vessel 1 is located in a harbor (Y in Step S131), the controller 10 reduces the ejection amount of the bubbles B (Step S136). After Step S136 is executed, the operation S130 ends.

When it is determined that the vessel 1 is not located in a harbor (located outside the harbor) (N in Step S131), the acceleration/deceleration determiner 34 determines whether to accelerate the hull 90 on the basis of information J1 of at least one of a fuel input amount S2 to the main engine 74 and an actual rotation rate N2 (Step S132).

When the acceleration/deceleration determiner 34 determines to accelerate the hull 90 (Y in Step S132), the bubble control unit 20 increases the ejection amount of the bubbles B (Step S133). In this step, when the ejection mechanism 80 is not activated, the ejection mechanism 80 is activated to eject the bubbles B, and when the ejection mechanism 80 is already activated, the ejection amount of the bubbles B is increased. After Step S133 is executed, S130 ends.

When the acceleration/deceleration determiner 34 determines not to accelerate the hull 90 (N in Step S132), the acceleration/deceleration determiner 34 determines whether to decelerate the hull 90 on the basis of the information J1 (Step S134). When the acceleration/deceleration determiner 34 determines not to decelerate the hull 90 (N in Step S134), the operation S130 ends.

When the acceleration/deceleration determiner 34 determines to decelerate the hull 90 (Y in Step S134), the controller 10 reduces the ejection amount of the bubbles B (Step S135). After Step S135 is executed, the operation S130 ends. Each step described above is merely an example, and various modifications can be made.

Features of the controller 10 of the present embodiment will be described. In the present embodiment, the propulsion mechanism 70 includes the main engine 74 that rotates the propeller 75. In addition, the present embodiment includes the acceleration/deceleration determiner 34 that determines whether to accelerate or decelerate the hull 90 on the basis of at least one of the fuel input amount to the main engine 74 and the actual rotation rate. The bubble control unit 20 executes at least one of the first operation of increasing the ejection amount of the bubbles when acceleration is determined by the acceleration/deceleration determiner 34 and the second operation of reducing the ejection amount of the bubbles when deceleration is determined by the acceleration/deceleration determiner 34. In this case, the time to reach the target speed can be shortened.

The present embodiment includes the position determiner 33 that acquires a position signal indicating the position of the vessel 1 and determines whether the vessel 1 is located in a harbor on the basis of the position signal. The bubble control unit 20 reduces the ejection amount of the bubbles when the position determiner 33 determines that the vessel 1 is located in a harbor. In this case, it is possible to avoid using less effective air lubrication and to improve energy efficiency in the harbor.

The above is the description of the third embodiment.

### Fourth Embodiment

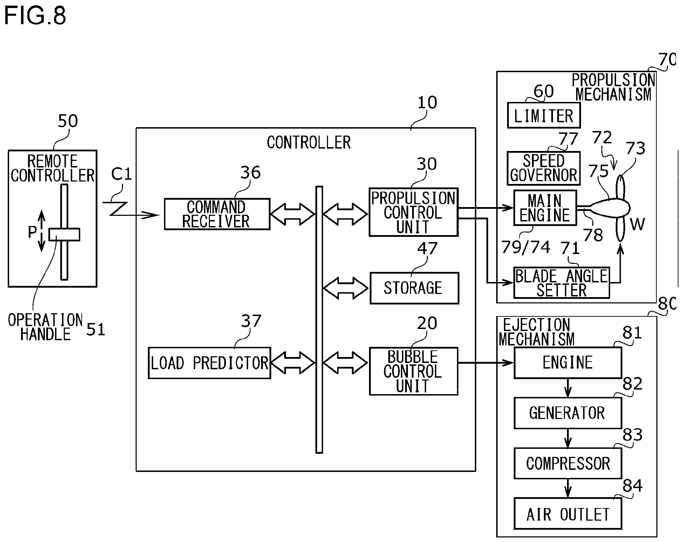

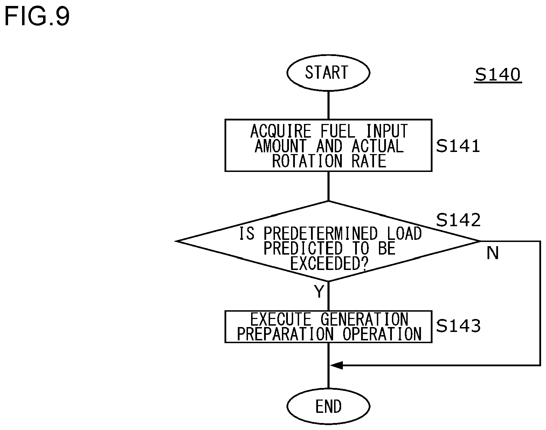

Hereinafter, a controller 10 according to the fourth embodiment of the present invention will be described with reference to FIGS. 8 and 9. FIG. 8 is a block diagram schematically illustrating the controller 10 of the present embodiment. The controller 10 of the present embodiment includes a bubble control unit 20, a propulsion control unit 30, a command receiver 36, a load predictor 37, and a storage 47. Since the present embodiment is different from the first embodiment in that the load predictor 37 is provided, the load predictor 37 will be mainly described.

When the load of a main engine 74 increases during sailing and a state in which a load (hereinafter, referred to as a "predetermined load F1") set in advance for the main engine is exceeded (hereinafter referred to as "high load state") continues for a long time, the fuel consumption amount and the fuel cost during sailing increase, and it becomes uneconomical. In other words, suppressing the high load state of the main engine 74 in a short period during sailing also leads to reduction in fuel cost during sailing and extension of the life of the main engine 74. The predetermined load F1 in this case can be set by a sailing experiment or the like using the deterioration state of the main engine 74, the fuel consumption amount, and the like as parameters.

Depending on the marine situation and the state of the main engine 74, the high load state of the main engine 74 at the time of unintended acceleration occurs due to a speed increase command from an operation device such as a remote controller 50. In addition, when the load of the main engine 74 exceeds the predetermined load F1, the fuel input amount of the main engine 74 may rapidly increase.

After the high load state has occurred, the ejection mechanism 80 may be activated to reduce the load on the main engine 74. However, it takes a certain time (hereinafter, referred to as "start time") for the ejection mechanism 80 to activate an engine 81, a generator 82, and a compressor 83 after receiving an activation command and to cover a vessel bottom 92 with bubbles B in a predetermined state. Therefore, before the above-described high load state occurs, it is desirable to make a determination as to the load state of the main engine 74 and transmit a start preparation signal to the ejection mechanism 80 to cause the ejection mechanism 80 to perform a bubble generation preparation operation. Therefore, in the present embodiment, the load of the main engine 74 is monitored by the load predictor 37, and before the main engine 74 exceeds the predetermined load F1, an activation preparation command is sent to cause the ejection mechanism 80 to perform the bubble generation preparation operation.

By performing the generation preparation operation, the bubbles B are quickly discharged from the ejection mechanism 80 after a speed increase command, and the high load state at the time of acceleration can be suppressed by the air lubrication effect. Examples of the generation preparation operation include checking the operation of each element such as the engine 81, the generator 82, and the compressor 83, an idling operation of each element, checking the pressure of bubble ejection air, and in a case where the pressure is less than a threshold value, driving the compressor to replenish compressed air to the tank.

In the present embodiment, the load predictor 37 predicts whether the main engine 74 exceeds the predetermined load F1 on the basis of the current fuel input amount S2 to the main engine 74 and the actual rotation rate N2 of the main engine 74. For example, the fuel input amount S2 can be acquired from a speed governor 77. The speed governor 77 of this example includes a rack and pinion (not illustrated), is configured to supply the main engine 74 with an amount of fuel corresponding to the rack position, and can specify the fuel input amount S2 on the basis of the rack position.

For example, the load predictor 37 compares the acquired fuel input amount S2 and actual rotation rate N2 with reference values set in advance for these, and can predict whether the main engine 74 exceeds the predetermined load F1 on the basis of the comparison result. Specifically, for the main engine 74, a reference value of the fuel input amount for each rotation rate from a low-speed side rotation rate to a high-speed side rotation rate in the use range is set, and each reference value is stored in the storage 47. The load predictor 37 acquires the reference value of the fuel input amount corresponding to the actual rotation rate N2 from stored information of the storage 47, and predicts that the main engine 74 exceeds the predetermined load F1 when the deviation of the fuel input amount S2 from the acquired reference value exceeds the threshold value.

The reference value of the fuel input amount for each rotation rate described above may be set in advance, or a machine learning model generated by learning may be used. As an example, this machine learning model can be generated by machine learning (supervised learning) using information regarding the actual rotation rate N2 of the main engine 74, the rack position of the speed governor 77, and the handle position P of the remote controller 50 as inputs and a variation in the load of the main engine 74 as an output during a marine test or sailing of the vessel.

In addition, the machine learning model can also be generated by applying a parameter at the time of operation of the main engine 74 to a calculation formula of the output of the main engine 74 and the load of the main engine 74. In this case, a reference value further reflecting the characteristics of the main engine 74 can be created, and the prediction accuracy of the load predictor 37 can be improved.

In addition, the load predictor 37 may predict whether the main engine 74 exceeds the predetermined load F1 by performing table processing using a table created in advance with respect to the acquired fuel input amount S2 and actual rotation rate N2.

When the load predictor 37 predicts that the load of the main engine 74 exceeds the predetermined load F1, the bubble control unit 20 causes the ejection mechanism 80 to execute the bubble B generation preparation operation. In this case, it is possible to suppress a rapid increase in the fuel input amount when the predetermined load F1 is exceeded.

The prediction accuracy of the load predictor 37 is reduced depending on a state of disturbance (hereinafter, simply referred to as "disturbance") that is a predetermined factor affecting at least one of the propulsion speed and the propulsion direction of the vessel 1. Examples of the disturbance to the hull 90 include a tidal current (hereinafter, simply referred to as "tidal current") in a water area where the vessel 1 sails, wind, a course (hereinafter, simply referred to as "course") along which the vessel 1 is scheduled to sail, the draft of the hull, the target rotation rate N1, a target fuel input amount S1, and the like. Therefore, the load predictor 37 of the present embodiment further predicts whether the main engine 74 exceeds the predetermined load F1 on the basis of at least one of the tidal current, the wind, the course, the draft of the hull, the target rotation rate N1, and the target fuel input amount S1. In this case, the prediction accuracy as to whether the predetermined load F1 is exceeded can be improved. The state of these disturbances is visually decided by the operator and input to the controller 10.

Operation S140 of the controller 10 of the present embodiment configured as described above will be described. FIG. 9 is a flowchart illustrating the operation S140 of the controller 10.

When the operation S140 is started, the load predictor 37 acquires the fuel input amount S2 and the actual rotation rate N2 (Step S141). The load predictor 37 predicts whether the main engine 74 exceeds the predetermined load F1 on the basis of the acquired fuel input amount S2 and actual rotation rate N2 (Step S142). In this step, the load predictor 37 further predicts whether the main engine 74 exceeds the predetermined load F1 on the basis of at least one of the tidal current, the wind, the course, the draft of the hull, the target rotation rate N1, and the target fuel input amount S1.

When the load predictor 37 determines that the main engine 74 does not exceed the predetermined load F1 (N in Step S142), the controller 10 ends the operation S140. When the load predictor 37 predicts that the main engine 74 exceeds the predetermined load F1 (Y in Step S142), the bubble control unit 20 performs the bubble B generation preparation operation (Step S143). After Step S143 is executed, S140 ends. Each step described above is merely an example, and various modifications can be made.

Features of the controller 10 of the present embodiment will be described. In the present embodiment, the propulsion mechanism 70 includes the main engine 74 that rotates the propeller 75. In addition, the present embodiment includes the load predictor 37 that predicts whether the load of the main engine 74 exceeds the predetermined load on the basis of the current fuel input amount to the main engine 74 and the actual rotation rate of the main engine 74. When the load predictor 37 predicts that the load of the main engine 74 exceeds the predetermined load, the bubble control unit 20 causes the ejection mechanism 80 to execute the bubble generation preparation operation. In this case, it is possible to suppress a rapid increase in the fuel input amount when the predetermined load is exceeded.

The load predictor 37 further predicts whether the load of the main engine 74 exceeds the predetermined load on the basis of at least one of the tidal current in a water area where the vessel 1 sails, the wind, the course along which the vessel 1 is scheduled to sail, the draft of the hull, the target rotation rate, and the target fuel input amount. In this case, the prediction accuracy regarding that the predetermined load is exceeded can be improved.

The above is the description of the fourth embodiment.

### Fifth Embodiment

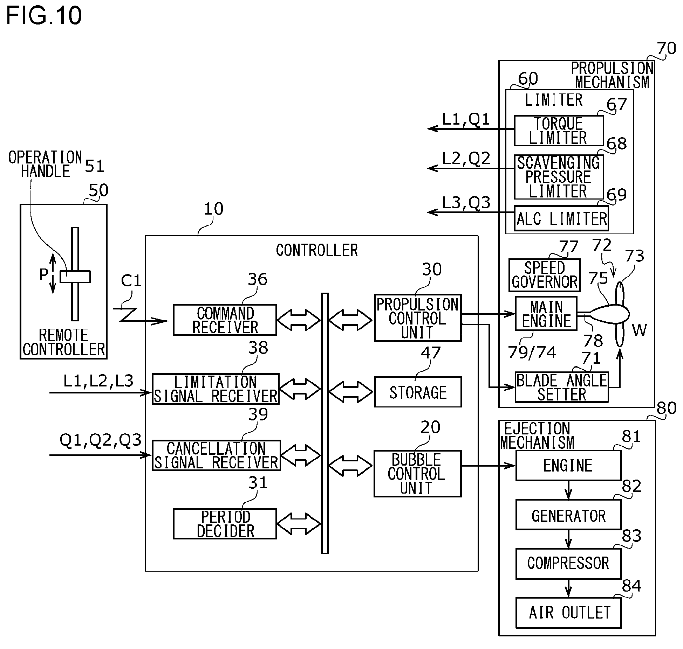

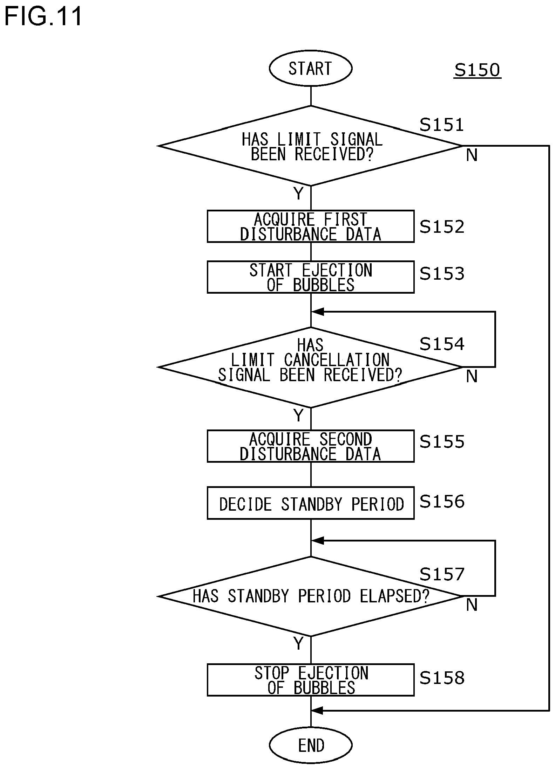

Hereinafter, a controller 10 according to the fifth embodiment of the present invention will be described with reference to FIGS. 10 and 11. FIG. 10 is a block diagram schematically illustrating the controller 10 of the present embodiment. The controller 10 of the present embodiment includes a bubble control unit 20, a propulsion control unit 30, a command receiver 36, and a limitation signal receiver 38, a cancellation signal receiver 39, a period decider 31, and a storage 47. The present embodiment is different from the first embodiment in that the limitation signal receiver 38, the cancellation signal receiver 39, and the period decider 31 are provided. Therefore, the limitation signal receiver 38, the cancellation signal receiver 39, and the period decider 31 will be mainly described.

As described above, the propulsion mechanism 70 includes the limiter 60 to prevent the overload state of a main engine 74. However, depending on the state of the hull 90 or the state of disturbance, there is a case where the fuel should be input beyond the threshold value of the limiter 60 while avoiding the operation of the limiter 60. Therefore, in the present embodiment, when the load of the main engine 74 exceeds the predetermined load, the ejection amount of bubbles B is increased, and the operation of the limiter 60 is avoided or alleviated by the air lubrication effect.

In the present embodiment, the limiter 60 includes a torque limiter 67, a scavenging pressure limiter 68, and an ALC limiter 69. The torque limiter 67 detects the torque of the main engine 74, and limits the fuel input amount to the main engine 74 to suppress an increase in the load of the main engine 74 when the detection result exceeds a preset torque threshold value T1. The scavenging pressure limiter 68 detects the scavenging pressure of the main engine 74, and limits the fuel input amount to suppress an increase in the load of the main engine 74 when the detection result exceeds a preset scavenging pressure threshold value T2. The ALC limiter 69 compares the target load and the actual load of the main engine 74, and reduces the blade angle of a propeller blade 73 to suppress an increase in the load of the main engine 74 when the actual load is in an overload state higher than the target load.

In the present embodiment, the torque limiter 67 generates a first limit signal L1 and provides the first limit signal L1 to the controller 10 when the torque of the main engine 74 exceeds the threshold value T1, and generates a first limit cancellation signal Q1 and provides the first limit cancellation signal Q1 to the controller 10 when the torque of the main engine 74 is equal to or less than the threshold value T1. In addition, the scavenging pressure limiter 68 generates a second limit signal L2 and provides the second limit signal L2 to the controller 10 when the scavenging pressure of the main engine 74 exceeds the threshold value T2, and generates a second limit cancellation signal Q2 and provides the second limit cancellation signal Q2 to the controller 10 when the scavenging pressure of the main engine 74 is equal to or less than the threshold value T2. In addition, the ALC limiter 69 generates a third limit signal L3 and provides the third limit signal L3 to the controller 10 when the actual load is higher than the target load, and generates a third limit cancellation signal Q3 and provides the third limit cancellation signal Q3 to the controller 10 when the actual load is equal to or less than the target load.

The first limit signal L1, the second limit signal L2, and the third limit signal L3 are collectively referred to simply as the "limit signal", and the first limit cancellation signal Q1, the second limit cancellation signal Q2, and the third limit cancellation signal Q3 are collectively referred to simply as a "limit cancellation signal".

The limitation signal receiver 38 receives the limit signal indicating that the load of the main engine 74 exceeds the predetermined load. When receiving the limit signal, the bubble control unit 20 increases the ejection amount of the bubbles B. In this case, it is possible to smoothly increase the speed or maintain the speed at the time of disturbance. In particular, the bubble control unit 20 increases the ejection amount of the bubbles B when the limitation signal receiver 38 receives at least one of the first limit signal L1, the second limit signal L2, and the third limit signal L3.

The cancellation signal receiver 39 receives the limit cancellation signal. When receiving the cancellation signal, the bubble control unit 20 reduces the ejection amount of the bubbles B. In the present embodiment, the cancellation signal receiver 39 reduces the ejection amount of the bubbles B when a predetermined cancellation condition including the reception of the limit cancellation signal is satisfied. In this case, the fuel consumption amount of the ejection mechanism 80 can be reduced by reducing the ejection amount of the bubbles B. In particular, the bubble control unit 20 reduces the ejection amount of the bubbles B when the cancellation signal receiver 39 receives the first limit cancellation signal Q1, the second limit cancellation signal Q2, and the third limit cancellation signal Q3.

The predetermined cancellation condition is not particularly limited as long as it relates to the state of disturbance or the load state of the main engine 74. In the present embodiment, the predetermined cancellation condition includes that an actual rotation rate N2 of the main engine 74 has reached a target rotation rate N1. Since the vessel speed can be maintained when the actual rotation rate N2 reaches the target rotation rate N1, the fuel consumption amount of the ejection mechanism 80 can be reduced by reducing the ejection amount of the bubbles B.

When the period (hereinafter, referred to as "ON/OFF period") between ON and OFF of the ejection mechanism 80 is short, it may lead to deterioration. Therefore, the bubble control unit 20 of the present embodiment reduces the ejection amount of the bubbles B after a predetermined standby period has elapsed from the reception of the limit cancellation signal. In this case, the ON/OFF period of the ejection mechanism 80 can be extended.

As described above, there is a case where the disturbance that is a predetermined factor affecting at least one of the propulsion speed and the propulsion direction of the vessel 1 is received. In the present embodiment, when the magnitude (hereinafter, referred to as "second disturbance data G2") of the disturbance at the time point of receiving the limit cancellation signal is larger than the magnitude (hereinafter, referred to as "first disturbance data G1") of the disturbance at the time point of receiving the limit signal, it is desirable to extend the standby period. Conversely, in a case where the second disturbance data G2 at the time point of receiving the limit cancellation signal is smaller than the first disturbance data G1 at the time point of receiving the limit signal, the standby period can be shortened. Therefore, the controller 10 of the present embodiment further includes the period decider 31 that decides the standby period on the basis of the first disturbance data G1 at the time point of receiving the limit signal and the second disturbance data G2 at the time point of receiving the limit cancellation signal. The standby period can be set by experiment. When the first disturbance data G1 and the second disturbance data G2 are collectively referred to, they are simply referred to as disturbance data.

Although the disturbance is not limited, examples of the disturbance include a tidal current, wind, a course, a draft, and the like. The first disturbance data G1 and the second disturbance data G2 in the present embodiment are visually decided by the operator and input to the controller 10. The period decider 31 stores the first disturbance data G1 at the time point of receiving the limit signal and the second disturbance data G2 at the time point of receiving the limit cancellation signal in the storage 47 on the basis of the input disturbance data. The period decider 31 decides the standby period on the basis of the stored first disturbance data G1 and second disturbance data G2.

From the viewpoint of extending the ON/OFF period of the ejection mechanism 80, the bubble control unit 20 of the present embodiment increases the ejection amount of the bubbles B after a predetermined start waiting period has elapsed from the reception of the limit signal. The start waiting period can be set by experiment.

As described above, the limit signal of the present embodiment includes the first limit signal L1 or the second limit signal L2.

As described above, the controller 10 of the present embodiment controls the propulsion mechanism 70 having a variable pitch propeller 72. Therefore, the limit signal of the present embodiment further includes the third limit signal L3. Note that when the controller controls the propulsion mechanism not including the variable pitch propeller, the limit signal does not include the third limit signal L3.

Operation S150 of the controller 10 of the present embodiment configured as described above will be described. FIG. 11 is a flowchart illustrating the operation S150 of the controller 10.

When the operation S150 is started, the controller 10 determines whether the limitation signal receiver 38 has received the limit signal (Step S151). When the limit signal is not received (N in Step S151), the controller 10 ends the operation S150.

When receiving the limit signal (Y in Step S151), the controller 10 acquires the first disturbance data G1 from a disturbance sensor 53 (Step S152). In this step, the controller 10 stores the first disturbance data G1.

When Step S152 is executed, the bubble control unit 20 increases the ejection amount of the bubbles B (Step S153) .

When Step S153 is executed, the controller 10 determines whether the cancellation signal receiver 39 has received the limit cancellation signal (Step S154). When the limit cancellation signal has not been received (N in Step S154), the controller 10 returns the processing to the beginning of Step S154 and repeats Step S154.

When receiving the limit cancellation signal (Y in Step S154), the controller 10 acquires the second disturbance data G2 from the disturbance sensor 53 (Step S155). In this step, the controller 10 stores the second disturbance data G2 in the storage 47.

After executing Step S155, the period decider 31 decides the standby period on the basis of the first disturbance data G1 and the second disturbance data G2 (Step S156) .

After executing Step S156, the controller 10 determines whether the standby period has elapsed (Step S157). When the standby period has not elapsed (N in Step S157), the controller 10 returns the processing to the beginning of Step S157 and repeats Step S157.

When the standby period has elapsed (Y in Step S157), the bubble control unit 20 reduces the ejection amount of the bubbles B (Step S158). After Step S158 is executed, S150 ends. Each step described above is merely an example, and various modifications can be made.

Features of the controller 10 of the present embodiment will be described. In the present embodiment, the propulsion mechanism 70 includes the main engine 74 that rotates the propeller 75. In addition, the present embodiment includes the limitation signal receiver 38 that receives the limit signal indicating that the load of the main engine 74 exceeds the predetermined load. When the limitation signal receiver 38 receives the limit signal, the bubble control unit 20 increases the ejection amount of the bubbles. In this case, the operation of the limiter can be avoided or alleviated, and smooth speed increase and speed maintenance at the time of disturbance can be realized.

The present embodiment includes the cancellation signal receiver 39 that receives the limit cancellation signal indicating that the load of the main engine 74 is equal to or less than the predetermined load, and the bubble control unit 20 reduces the ejection amount of the bubbles when a cancellation condition including the reception of the limit cancellation signal by the cancellation signal receiver 39 is satisfied. In this case, the energy consumption amount (fuel consumption amount) of the ejection mechanism 80 can be reduced.

In the present embodiment, the predetermined cancellation condition includes that the actual rotation rate of the main engine 74 has reached the target rotation rate. In this case, when the target rotation rate is reached, the energy consumption amount of the ejection mechanism 80 can be reduced.

In the present embodiment, the predetermined cancellation condition includes that a predetermined standby period has elapsed since the reception of the limit signal. In this case, it is possible to prevent the ON/OFF period from being excessively shortened.

The present embodiment further includes the period decider 31 that decides the standby period on the basis of the first disturbance data that is the disturbance data at the time point of receiving the limit signal and the second disturbance data that is the disturbance data at the time point of receiving the limit cancellation signal, which are the disturbance data of the magnitude of the disturbance that is a predetermined factor affecting at least one of the propulsion speed and the propulsion direction of the vessel 1. In this case, when the disturbance is reduced, the standby period can be shortened to reduce the energy consumption amount of the ejection mechanism 80.

In the present embodiment, the limit signal includes the limit signal generated by the torque limiter when the torque of the main engine 74 exceeds the threshold value, and the limit signal generated by the scavenging pressure limiter when the scavenging pressure of the main engine 74 exceeds the threshold value. In this case, even in a situation where the torque limiter or the scavenging pressure limiter operates, smooth speed increase and speed maintenance at the time of disturbance can be realized.

In the present embodiment, the propeller 75 is the variable pitch propeller 72 capable of changing the blade angle of a propeller blade 73, the propulsion mechanism 70 includes the ALC limiter that reduces the output of the main engine 74 when the actual load is higher than the target load, and the limit signal includes a limit signal generated by the ALC limiter when the actual load is higher than the target load. In this case, even in a situation where the ALC limiter operates, smooth speed increase and speed maintenance at the time of disturbance can be realized.

The above is the description of the fifth embodiment.

### Sixth Embodiment

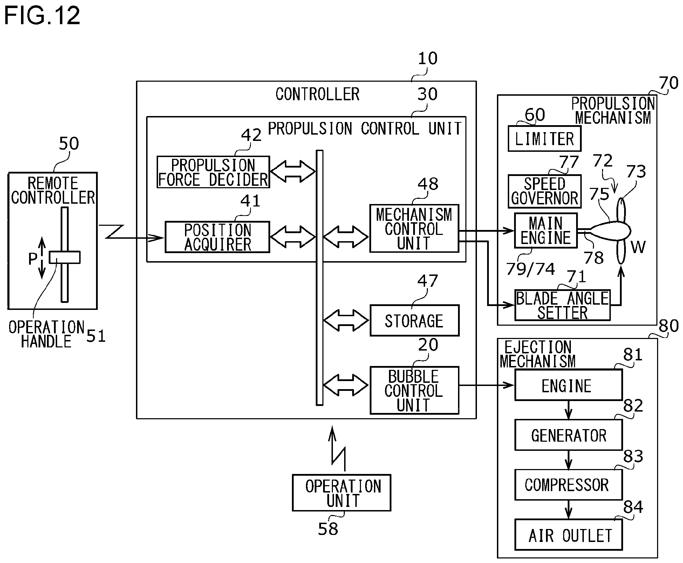

Hereinafter, a controller 10 according to the sixth embodiment of the present invention will be described with reference to FIGS. 12, 13 and 14. FIG. 12 is a block diagram schematically illustrating the controller 10 of the present embodiment. The controller 10 of the present embodiment includes a bubble control unit 20, a propulsion control unit 30, and a storage 47. In particular, the present embodiment is different from the first embodiment in that the propulsion control unit 30 controls the propulsion mechanism 70 according to the control of the bubble control unit 20. That is, the propulsion control unit 30 controls the propulsion force of the propulsion mechanism 70 according to the ejection state of bubbles B of an ejection mechanism 80.

In addition, the present embodiment is different from the first embodiment in that the propulsion control unit 30 includes a position acquirer 41, a propulsion force decider 42, and a mechanism control unit 48. In addition, in the present embodiment, the bubble control unit 20 acquires an operation result from an operation unit 58, and controls the operation of the ejection mechanism 80 on the basis of the operation result. Therefore, the position acquirer 41, the propulsion force decider 42, the mechanism control unit 48, and the operation unit 58 will be mainly described.

The operation unit 58 is installed on the bridge or the like of a vessel 1 for the operator to operate. When the operator operates the operation unit 58 to start the operation of the ejection mechanism 80, the operation unit 58 provides the controller 10 with operation start information (hereinafter, referred to as "ON information"). In addition, when the operator operates the operation unit 58 to stop the operation of the ejection mechanism 80, the operation unit 58 provides the controller 10 with operation stop information (hereinafter, referred to as "OFF information"). The ON information and the OFF information are collectively referred to as "ON/OFF information". The ON/OFF information is provided to the bubble control unit 20 and the propulsion control unit 30 in the controller 10. The bubble control unit 20 controls the ejection mechanism 80 to eject air on the basis of the ON information and controls the ejection mechanism 80 not to eject air on the basis of the OFF information. The propulsion control unit 30 controls the propulsion mechanism 70 on the basis of the ON/OFF information. That is, the propulsion control unit 30 controls the target propulsion force of the propulsion mechanism 70 according to the control of the bubble control unit 20 as to whether to eject air.

The position acquirer 41 acquires a handle position P of an operation handle 51 of a remote controller 50. The position acquirer 41 exemplifies an operation state acquirer. The remote controller 50 transmits a signal corresponding to the handle position P of the operation handle 51 to the position acquirer 41. The position acquirer 41 acquires the handle position P on the basis of the reception result of the signal from the remote controller 50.

The propulsion force decider 42 decides a target propulsion force E1 of the propulsion mechanism 70 according to the acquired handle position P. The mechanism control unit 48 controls the propulsion force by changing at least one of the rotation rate of a main engine 74 and a blade angle W according to the decided target propulsion force E1. For example, when the target propulsion force E1 increases, the mechanism control unit 48 increases the rotation rate of the main engine 74 or increases the blade angle W to increase the propulsion force. When the target propulsion force E1 is reduced, the mechanism control unit 48 reduces the rotation rate of the main engine 74 or reduces the blade angle W to reduce the propulsion force.

For example, when the bubble control unit 20 ejects air while maintaining the propulsion force constant, the air lubrication effect is generated, and the vessel speed becomes faster than that at the non-ejection time. In order to suppress the variation of the vessel speed, it is effective to make the propulsion force at the ejection time smaller than that at the non-ejection time. Therefore, in the present embodiment, the propulsion force decider 42 decides a target propulsion force E1-A when the ejection mechanism 80 ejects air (ejection time) to be smaller than a target propulsion force E1-B when the ejection mechanism 80 does not eject air (non-ejection time) on the basis of the control of the bubble control unit 20. In this case, the variation of the vessel speed due to the air lubrication effect can be suppressed.

The target propulsion force E1 may be any element indicating the propulsion force, and is not particularly limited. In the present embodiment, the target propulsion force E1 is the target rotation rate N1 of the main engine 74. By reducing the target rotation rate N1 as the target propulsion force E1, a change in the vessel speed due to a reduction in the frictional resistance can be easily suppressed, and the fuel consumption amount of the main engine 74 can be saved. As another example, the target propulsion force E1 may be a target blade angle W1 of a propeller blade 73. By reducing the target blade angle W1 as the target propulsion force E1, a change in the vessel speed due to a reduction in the frictional resistance can be easily suppressed, and the load of the main engine 74 is reduced so that the fuel consumption amount can be saved.

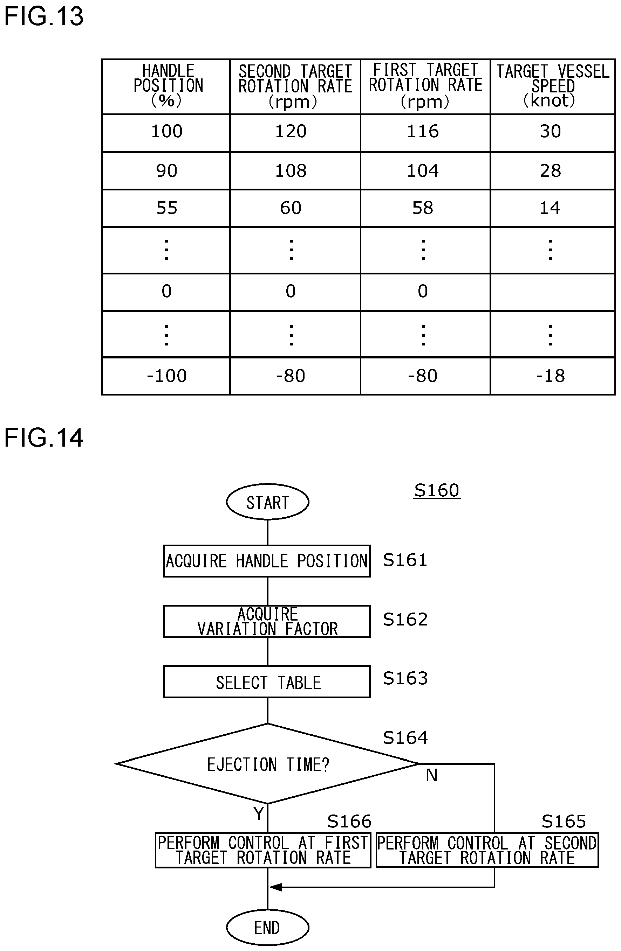

An example in which the target propulsion force E1 is the target rotation rate N1 will be specifically described. FIG. 13 is a diagram illustrating a table TBL1 related to the target propulsion force E1-B (second target rotation rate N1-B) at the non-ejection time, the target propulsion force E1-A (first target rotation rate N1-A) at the ejection time, and a target vessel speed corresponding to the handle position P of the operation handle 51. The unit of the rotation rate is [rpm], and the unit of the vessel speed is [knot]. The handle position P is indicated as 100% when the operation handle 51 is at the upper limit position, 0% when the operation handle 51 is at the intermediate position, and -100% when the operation handle 51 is at the lower limit position.

The propulsion force decider 42 uses the table TBL1 to decide either the first target rotation rate N1-A corresponding to the handle position P and the ON information or the second target rotation rate N1-B corresponding to the handle position P and the OFF information as the target rotation rate N1.

For example, in the case of navigation at the handle position P = 55% and the second target rotation rate N1-B = 60 rpm at the non-ejection time, the vessel speed becomes 14 knot (target vessel speed) in calm water without disturbance. In this state, when the ejection mechanism 80 ejects air while maintaining the second target rotation rate N1-B, the vessel speed becomes faster due to the air lubrication effect. Here, by switching the target rotation rate to the first target rotation rate N1-A = 58 rpm, the vessel speed becomes 14 knot, and the vessel speed variation can be suppressed. That is, by switching the target rotation rate N1 between the non-ejection time and the ejection time with respect to the same handle position P, the vessel speed variation can be suppressed.

Next, a decrease width DWE of the target propulsion force E1-A at the ejection time with respect to the target propulsion force E1-B at the non-ejection time will be described. The decrease width DWE is obtained by subtracting the target propulsion force E1-A from the target propulsion force E1-B. Here, a decrease width DWN of the first target rotation rate N1-A at the ejection time with respect to the second target rotation rate N1-B at the non-ejection time will be described as an example. The decrease width DWN is obtained by subtracting the first target rotation rate N1-A from the second target rotation rate N1-B.

The air lubrication effect varies with various variation factors. Examples of the variation factor that changes the air lubrication effect include a vessel speed, an actual rotation rate, and a draft. For example, in a case where the vessel speed is high, in a case where the actual rotation rate N2 of the main engine 74 is large, or in a case where the draft is deep, the air lubrication effect is relatively enhanced. When the decrease width DWE of the propulsion force is constant, in a case where the air lubrication effect is enhanced, suppression of the vessel speed variation at the ejection time and at the non-ejection time becomes insufficient. Therefore, in the present embodiment, the propulsion force decider 42 changes the decrease width DWE of the propulsion force according to the variation factor of the air lubrication effect.

In the present embodiment, the propulsion force decider 42 decides the target propulsion force E1 so that the decrease width DWE of the propulsion force increases as the vessel speed increases. In this example, the propulsion force decider 42 decides the target rotation rate N1 so that the decrease width DWN of the rotation rate increases as the vessel speed increases.

The decrease width DWE and the decrease width DWN may continuously increase and decrease or may increase and decrease stepwise with respect to the vessel speed. The propulsion force decider 42 includes a plurality of tables TBL1 corresponding to a plurality of vessel speeds, and makes a decision using the table TBL1 selected from the plurality of tables TBL1 according to the actual vessel speed. For example, the propulsion force decider 42 can acquire the vessel speed from a vessel speed sensor capable of detecting the vessel speed.

In addition, in the present embodiment, the propulsion force decider 42 decides the target propulsion force E1 so that the decrease width DWE of the propulsion force increases as the actual rotation rate N2 increases. In this example, the propulsion force decider 42 decides the target rotation rate N1 so that the decrease width DWN of the rotation rate increases as the actual rotation rate N2 increases.

The decrease width DWE and the decrease width DWN may continuously increase and decrease or may increase and decrease stepwise with respect to the actual rotation rate N2. The propulsion force decider 42 includes a plurality of tables TBL1 corresponding to a plurality of actual rotation rates N2, and makes a decision using the table TBL1 selected from the plurality of tables TBL1 according to the actual actual rotation rate N2. For example, the propulsion force decider 42 can acquire the actual rotation rate N2 from a sensor (not illustrated) capable of detecting the actual rotation rate N2.

In addition, in the present embodiment, the propulsion force decider 42 decides the target propulsion force E1 so that the decrease width DWE of the propulsion force increases as the draft becomes deeper. In this example, the propulsion force decider 42 decides the target rotation rate N1 so that the decrease width DWN of the rotation rate increases as the draft becomes deeper.

The decrease width DWE and the decrease width DWN may continuously increase and decrease or may increase and decrease stepwise with respect to the draft. The propulsion force decider 42 includes a plurality of tables TBL1 corresponding to a plurality of drafts, and makes a decision using the table TBL1 selected from the plurality of tables TBL1 according to the actual draft. For example, the propulsion force decider 42 can acquire the draft from a sensor (not illustrated) capable of detecting the draft.

As described above, the vessel speed variation can be further suppressed by changing the decrease width DWE and the decrease width DWN according to one or more of the vessel speed, the actual rotation rate, and the draft.

Operation S160 of the controller 10 of the present embodiment configured as described above will be described. FIG. 14 is a flowchart illustrating the operation S160 of the controller 10.

When the operation S160 is started, the position acquirer 41 acquires the handle position P of the operation handle 51 from the remote controller 50 (Step S161).

After executing Step S161, the propulsion force decider 42 acquires the variation factor such as the vessel speed, the actual rotation rate, and the draft (Step S162). When the variation factor is acquired, the propulsion force decider 42 selects the table TBL1 according to the variation factor (Step S163). In this step, the propulsion force decider 42 selects the table TBL1 to which the decrease width DWE and the decrease width DWN according to the variation factor are applied.

After executing Step S163, the propulsion force decider 42 determines whether it is the ejection time on the basis of the ON/OFF information (Step S164). In the case of not the ejection time (non-ejection time) (N in Step S164), the propulsion force decider 42 provides the mechanism control unit 48 with the second target rotation rate N1-B of the non-ejection time, and the mechanism control unit 48 controls the propulsion mechanism 70 at the second target rotation rate N1-B of the non-ejection time. (Step S165). After Step S165 is executed, S160 ends.

In the case of the ejection time (Y in Step S164), the propulsion force decider 42 provides the mechanism control unit 48 with the first target rotation rate N1-A of the ejection time, and the mechanism control unit 48 controls the propulsion mechanism 70 at the first target rotation rate N1-A of the ejection time (Step S166). After Step S166 is executed, S160 ends. Each step described above is merely an example, and various modifications can be made.

Features of the controller 10 of the present embodiment will be described. In the present embodiment, the propulsion control unit 30 controls the propulsion mechanism 70 according to the control of the bubble control unit 20. In this case, the energy consumption amount (fuel consumption amount) of the propulsion mechanism 70 can be reduced according to the control of the bubble control unit 20.

In the present embodiment, the propulsion mechanism 70 includes the main engine 74 that rotates the propeller 75. In addition, the propulsion control unit 30 controls the propulsion mechanism 70 so that the target propulsion force at the ejection time when the bubble control unit 20 ejects air becomes smaller than the target propulsion force at the non-ejection time when the bubble control unit 20 does not eject air. In this case, it is possible to suppress the vessel speed variation of the non-ejection time and the ejection time.

In the present embodiment, the propulsion control unit 30 increases the decrease width of the target propulsion force at the ejection time with respect to the target propulsion force at the non-ejection time as the vessel speed of the vessel 1 or the actual rotation rate of the main engine 74 increases. In this case, it is possible to further suppress the vessel speed variation of the non-ejection time and the ejection time.

In the present embodiment, the target propulsion force is the target rotation rate of the main engine 74. In this case, it is possible to suppress the vessel speed variation of the non-ejection time and the ejection time.

In the present embodiment, the propeller 75 is a variable pitch propeller 72 capable of changing the blade angle of the propeller blade 73, and the target propulsion force is the target blade angle of the propeller blade 73. In this case, it is possible to suppress the vessel speed variation of the non-ejection time and the ejection time.

The above is the description of the sixth embodiment. The table TBL1 of the present embodiment can be set on the basis of a theoretical value by simulation or predetermined calculation. The table TBL1 may be set on the basis of data at the time of a marine test operation, or may be updated on the basis of data at the time of a marine test operation or data during operation. The table TBL1 may include data of the actual rotation rate and vessel speed, data of the actual rotation rate and the load (shaft horsepower) of the main engine 74, or data of the actual rotation rate and the fuel consumption amount of the main engine 74.

### Seventh Embodiment

The seventh embodiment of the present invention is a method for controlling a controller 10. This control method includes a step of controlling one of an ejection mechanism 80 and a propulsion mechanism 70 according to the control of the other in the controller 10 that controls the ejection mechanism 80 that ejects bubbles B into the water through an air outlet 84 provided in a hull 90 of a vessel 1 and the propulsion mechanism 70 that propels the hull 90.

According to the present embodiment, operations and effects similar to those of the first embodiment are obtained.

### Eighth Embodiment

The eighth embodiment of the present invention is a control program 100 (computer program) of a controller 10. This control program 100 causes a computer to execute a step of controlling one of an ejection mechanism 80 and a propulsion mechanism 70 according to the control of the other in the controller 10 that controls the ejection mechanism 80 that ejects bubbles B into the water through an air outlet 84 provided in a hull 90 of a vessel 1 and the propulsion mechanism 70 that propels the hull 90.

These functions of the control program 100 may be installed in a storage (for example, storage 47) of the controller 10 as an application program in which a plurality of modules corresponding to functional blocks of the controller 10 is mounted. The control program 100 may be read and executed in main memory of a processor (for example, a CPU) of a computer incorporated in the controller 10.

According to the present embodiment, operations and effects similar to those of the first embodiment are obtained.

The examples of the embodiments of the present invention have been described in detail above. The above-described embodiments are merely specific examples for carrying out the present invention. The contents of the embodiments do not limit the technical scope of the present invention, and many design changes such as change, addition, and deletion of the components can be made without departing from the spirit of the invention defined in the claims. In the above-described embodiments, the contents that can be changed in design are described with notations such as "of the embodiment" and "in the embodiment", but it does not mean that the design change is not allowed for the contents without such notations.

### Modified Example

Hereinafter, a modified example will be described. In the drawings and description of the modified example, the same or equivalent components and members as those of the embodiments are denoted by the same reference numerals. The description overlapping with that of the embodiments will be omitted as appropriate, and the configuration different from those of the embodiments will be mainly described.

In the description of the embodiments, the example in which the propulsion mechanism 70 rotates the propeller 75 using the prime mover 79 to obtain the propulsion force has been described, but it is not limited thereto. It is sufficient if the propulsion mechanism can propel the hull, and the propulsion mechanism may be, for example, a mechanism that discharges gas or the like and obtains a propulsion force by the reaction force.

In the description of the embodiments, the example in which the prime mover 79 is a diesel engine has been described, but it is not limited thereto. The prime mover may be, for example, an internal combustion engine other than a diesel engine, an external combustion engine, an electric motor, or the like.

In the description of the embodiments, the example in which the disturbance data is input to the controller 10 by the operator has been described, but it is not limited thereto. For example, a sensor capable of detecting the disturbance data may be provided, and the controller may be configured to acquire the detection result of the sensor.

The above-described modified example provides operations and effects similar to those of the embodiments.

Any combination of the above-described embodiments and modified example is also useful as an embodiment of the present invention. A new embodiment generated by the combination has the effects of each of the combined embodiment and modified example. The invention is defined by the appended claims only.

## Claims

1. A controller (10) comprising:
a bubble control unit (20) configured to control an ejection mechanism (80) configured to eject bubbles into water through an air outlet (84) provided in a hull (90) of a vessel (1); and
a propulsion control unit (30) configured to control a propulsion force of a propulsion mechanism (70) configured to propel the hull (90), wherein
the propulsion mechanism (70) includes a main engine (74) configured to rotate a propeller (75),
one of the propulsion control unit (30) and the bubble control unit (20) is controlled according to control of the other, and
the bubble control unit (20) controls the ejection mechanism (80) according to control of the propulsion control unit (30);
a command receiver (36) configured to receive a command signal commanding a magnitude of the propulsion force of the propulsion mechanism (70) and an actual signal indicating a current magnitude of the propulsion force, wherein
the propulsion control unit (30) controls the propulsion force of the propulsion mechanism (70) on a basis of a comparison result between the command signal and the actual signal, and
the bubble control unit (20) increases an ejection amount of bubbles when the command signal indicates speed increase, or reduces the ejection amount of the bubbles when the command signal indicates speed reduction;
**characterized in that**
the command signal is a signal commanding a target rotation rate of the main engine (74),
the actual signal is an actual rotation rate, the actual rotation rate being a current rotation rate of the main engine (74),
the controller (10) comprises an overload predictor (32) configured to predict whether a load of the main engine (74) exceeds a predetermined load according to the target rotation rate, the actual rotation rate, and a current fuel input amount of the main engine (74), and
the bubble control unit (20) increases the ejection amount of the bubbles when the overload predictor (32) predicts that the predetermined load is exceeded.

2. The controller (10) according to claim 1, wherein
the propeller (75) is a variable pitch propeller (72) capable of changing a blade angle of a propeller blade (73),
the command signal is a target blade angle of the variable pitch propeller (72), the actual signal is an actual blade angle, the actual blade angle being a current blade angle of the variable pitch propeller (72), and
the overload predictor (32) predicts, on a basis of the target blade angle and the actual blade angle, whether the load of the main engine (74) exceeds the predetermined load.

3. The controller (10) according to claim 1, wherein
the controller (10) comprises a speed change determiner (35) configured to determine whether a speed change command to fall within a preset rotation rate range has been received when a current actual rotation rate of the main engine (74) is outside the rotation rate range, and
the bubble control unit (20) increases the ejection amount of the bubbles when the speed change determiner (35) determines that the speed change command to fall within the rotation rate range is received.

4. The controller (10) according to claim 1, wherein
the controller (10) comprises an acceleration/deceleration determiner configured to determine whether to accelerate or decelerate the hull (90) on a basis of at least one of a fuel input amount to the main engine (74) and an actual rotation rate, and
the bubble control unit (20) executes at least one of a first operation of increasing an ejection amount of bubbles when acceleration is determined by the acceleration/deceleration determiner (34) and a second operation of reducing the ejection amount of the bubbles when deceleration is determined by the acceleration/deceleration determiner (34).

5. The controller (10) according to claim 1, comprising:
a position determiner (33) configured to acquire a position signal indicating a position of the vessel (1) and determine whether the vessel (1) is located in a harbor on a basis of the position signal, wherein
the bubble control unit (20) reduces an ejection amount of bubbles when the position determiner (33) determines that the vessel (1) is located in the harbor.

6. The controller (10) according to claim 1, wherein
the controller (10) comprises a load predictor (37) configured to predict whether a load of the main engine (74) exceeds a predetermined load on a basis of a current fuel input amount to the main engine (74) and an actual rotation rate of the main engine (74), and the bubble control unit (20) causes the ejection mechanism (80) to execute a bubble generation preparation operation when the load predictor (37) predicts that the load of the main engine (74) exceeds the predetermined load.

7. The controller (10) according to claim 1, wherein
the controller (10) comprises a limitation signal receiver (38) configured to receive a limit signal indicating that a load of the main engine (74) exceeds a predetermined load, and the bubble control unit (20) increases an ejection amount of bubbles when the limitation signal receiver (38) receives the limit signal.

8. The controller (10) according to claim 7, wherein the limit signal includes a limit signal generated by a torque limiter (67) when a torque of the main engine (74) exceeds a threshold value, and a limit signal generated by a scavenging pressure limiter (68) when a scavenging pressure of the main engine (74) exceeds a threshold value.

9. The controller (10) according to claim 1, wherein
the propulsion control unit (30) controls the propulsion mechanism (70) according to control of the bubble control unit (20), and
the propulsion control unit (30) controls the propulsion mechanism (70) such that a target propulsion force at an ejection time when the bubble control unit (20) ejects air is smaller than a target propulsion force at a non-ejection time when the bubble control unit (20) does not eject air.

10. The controller (10) according to claim 9, wherein the propulsion control unit (30) increases a decrease width of the target propulsion force at the ejection time with respect to the target propulsion force at the non-ejection time as a vessel speed of the vessel (1) or an actual rotation rate of the main engine (74) increases.

11. A method for controlling a controller (10), the method comprising the step of:
controlling one of an ejection mechanism (80) and a propulsion mechanism (70) according to control of the other in the controller (10) configured to control the ejection mechanism (80) configured to eject bubbles into water through an air outlet (84) provided in a hull (90) of a vessel (1) and a propulsion mechanism (70) configured to propel the hull (90), wherein the ejection mechanism (80) is controlled according to control of the propulsion mechanism (70),
the propulsion force of the propulsion mechanism (70) is controlled on a basis of a comparison result between a command signal and an actual signal, the command signal commanding a magnitude of the propulsion force of the propulsion mechanism (70) and the actual signal indicating a current magnitude of the propulsion force, and
an ejection amount of bubbles is increased when the command signal indicates speed increase, or the ejection amount of the bubbles is reduced when the command signal indicates speed reduction;
**characterized in that**
the command signal is a signal commanding a target rotation rate of a main engine (74) included in the propulsion mechanism (70) and configured to rotate a propeller (75),
the actual signal is an actual rotation rate, the actual rotation rate being a current rotation rate of the main engine (74),
it is predicted whether a load of the main engine (74) exceeds a predetermined load according to the target rotation rate, the actual rotation rate, and a current fuel input amount of the main engine (74), and
the ejection amount of the bubbles is increased when it is predicted that the predetermined load is exceeded.

12. A program for controlling a controller (10), the program causing the controller (10) to execute the method according to claim

## Patentansprüche

1. Steuerung (10), umfassend:
eine Blasensteuereinheit (20), die eingerichtet ist, einen Ausstoßmechanismus (80) zu steuern, der eingerichtet ist, Blasen durch einen Luftauslass (84), der in einem Rumpf (90) eines Schiffs (1) vorgesehen ist, in Wasser auszustoßen; und
eine Antriebssteuereinheit (30), die eingerichtet ist, eine Antriebskraft eines Antriebsmechanismus (70) zu steuern, der eingerichtet ist, den Rumpf (90) anzutreiben, wobei
der Antriebsmechanismus (70) einen Hauptmotor (74) enthält, der eingerichtet ist, einen Propeller (75) zu drehen,
eine der Antriebssteuereinheit (30) und der Blasensteuereinheit (20) gemäß Steuerung der anderen gesteuert wird, und
die Blasensteuereinheit (20) den Ausstoßmechanismus (80) gemäß Steuerung der Antriebssteuereinheit (30) steuert;
einen Befehlsempfänger (36), der eingerichtet ist, ein Befehlssignal, das eine Größe der Antriebskraft des Antriebsmechanismus (70) befiehlt, und ein derzeitiges Signal, das eine momentane Größe der Antriebskraft anzeigt, zu empfangen, wobei
die Antriebssteuereinheit (30) die Antriebskraft des Antriebsmechanismus (70) auf einer Grundlage eines Vergleichsergebnisses zwischen dem Befehlssignal und dem derzeitigen Signal steuert, und
die Blasensteuereinheit (20) eine Ausstoßmenge von Blasen erhöht, wenn das Befehlssignal Geschwindigkeitserhöhung anzeigt, oder die Ausstoßmenge der Blasen verringert, wenn das Befehlssignal Geschwindigkeitsverringerung anzeigt;
**dadurch gekennzeichnet, dass**
das Befehlssignal ein Signal ist, das eine Zieldrehrate des Hauptmotors (74) anzeigt,
das derzeitige Signal eine derzeitige Drehrate ist, wobei die derzeitige Drehrate eine momentane Drehrate des Hauptmotors (74) ist,
die Steuerung (10) eine Überlastvoraussageeinrichtung (32) umfasst, die eingerichtet ist, vorauszusagen, ob eine Last des Hauptmotors (74) eine vorbestimmte Last überschreitet, gemäß der Zieldrehrate, der derzeitigen Drehrate, und einer momentanen Kraftstoffeingabemenge des Hauptmotors (74), und
die Blasensteuereinheit (20) die Ausstoßmenge der Blasen erhöht, wenn die Überlastvoraussageeinrichtung (32) voraussagt, dass die vorbestimmte Last überschritten wird.

2. Steuerung (10) nach Anspruch 1, wobei
der Propeller (75) ein Verstellpropeller (72) ist, der fähig ist, einen Blattwinkel eines Propellerblatts (73) zu ändern,
das Befehlssignal ein Zielblattwinkel des Verstellpropellers (72) ist,
das derzeitige Signal ein derzeitiger Blattwinkel ist, wobei der derzeitige Blattwinkel ein momentaner Blattwinkel des Verstellpropellers (72) ist, und
die Überlastvoraussageeinrichtung (32) auf einer Grundlage des Zielblattwinkels und des derzeitigen Blattwinkels bestimmt, ob die Last des Hauptmotors (74) die vorbestimmte Last überschreitet.

3. Steuerung (10) nach Anspruch 1, wobei
die Steuerung (10) eine Geschwindigkeitsänderungs-Bestimmungseinrichtung (35) umfasst, die eingerichtet ist, zu bestimmen, ob ein Geschwindigkeitsänderungsbefehl, um in einem voreingestellten Drehratenbereich zu liegen, empfangen wurde, wenn eine momentane derzeitige Drehrate des Hauptmotors (74) außerhalb des Drehratenbereichs ist, und
die Blasensteuereinheit (20) die Ausstoßmenge der Blasen erhöht, wenn die Geschwindigkeitsänderungs-Bestimmungseinrichtung (35) bestimmt, dass der Geschwindigkeitsänderungsbefehl, um in dem Drehratenbereich zu liegen, empfangen wird.

4. Steuerung (10) nach Anspruch 1, wobei
die Steuerung (10) eine Beschleunigungs/Verzögerungs-Bestimmungseinrichtung umfasst, die eingerichtet ist, zu bestimmen, ob der Rumpf (90) zu beschleunigen oder zu verzögern ist, auf einer Grundlage von mindestens einer aus einer Kraftstoffeingabemenge an den Hauptmotor (74) und einer derzeitigen Drehrate, und
die Blasensteuereinheit (20) mindestens einen ausführt aus einem ersten Betrieb des Erhöhens einer Ausstoßmenge von Blasen, wenn von der Beschleunigungs/Verzögerungs-Bestimmungseinrichtung (34) Beschleunigung bestimmt wird, und eines zweiten Betriebs des Verringerns der Ausstoßmenge der Blasen, wenn von der Beschleunigungs/Verzögerungs-Bestimmungseinrichtung (34) Verzögerung bestimmt wird.

5. Steuerung (10) nach Anspruch 1, umfassend:
eine Positionsbestimmungseinrichtung (33), die eingerichtet ist, ein Positionssignal zu erfassen, das eine Position des Schiffs (1) anzeigt, und zu bestimmen, ob das Schiff (1) sich in einem Hafen befindet, auf einer Grundlage des Positionssignals, wobei
die Blasensteuereinheit (20) eine Ausstoßmenge von Blasen verringert, wenn die Positionsbestimmungseinrichtung (33) bestimmt, dass sich das Schiff (1) in dem Hafen befindet.

6. Steuerung (10) nach Anspruch 1, wobei
die Steuerung (10) eine Lastvoraussageeinrichtung (37) umfasst, die eingerichtet ist, vorauszusagen, ob eine Last des Hauptmotors (74) eine vorbestimmte Last überschreitet, auf einer Grundlage einer momentanen Kraftstoffeingabemenge an den Hauptmotor (74) und einer derzeitigen Drehrate des Hauptmotors (74), und
die Blasensteuereinheit (20) den Ausstoßmechanismus (80) veranlasst, einen Blasenerzeugungs-Vorbereitungsbetrieb auszuführen, wenn die Lastvoraussageeinrichtung (37) voraussagt, dass die Last des Hauptmotors (74) die vorbestimmte Last überschreitet.

7. Steuerung (10) nach Anspruch 1, wobei
die Steuerung (10) einen Begrenzungssignalempfänger (38) umfasst, der eingerichtet ist, ein Begrenzungssignal zu empfangen, das anzeigt, dass eine Last des Hauptmotors (74) eine vorbestimmte Last überschreitet, und
die Blasensteuereinheit (20) eine Ausstoßmenge von Blasen erhöht, wenn der Begrenzungssignalempfänger (38) das Begrenzungssignal empfängt.

8. Steuerung (10) nach Anspruch 7, wobei das Begrenzungssignal ein Begrenzungssignal, das von einem Drehmomentbegrenzer (67) erzeugt wird, wenn ein Drehmoment des Hauptmotors (74) einen Schwellenwert überschreitet, und ein Begrenzungssignal, das von einem Spüldruckbegrenzer (68) erzeugt wird, wenn ein Spüldruck des Hauptmotors (74) einen Schwellenwert überschreitet, enthält.

9. Steuerung (10) nach Anspruch 1, wobei
die Antriebssteuereinheit (30) den Antriebsmechanismus (70) gemäß Steuerung der Blasensteuereinheit (20) steuert,
die Antriebssteuereinheit (30) den Antriebsmechanismus (70) so steuert, dass eine Zielantriebskraft zu einer Ausstoßzeit, wenn die Blasensteuereinheit (20) Luft ausstößt, geringer ist als eine Zielantriebskraft zu einer Nicht-Ausstoßzeit, wenn die Blasensteuereinheit (20) Luft nicht ausstößt.

10. Steuerung (10) nach Anspruch 9, wobei die Antriebssteuereinheit (30) eine Abnahmebreite der Zielantriebskraft zu der Ausstoßzeit in Bezug auf die Zielantriebskraft zu der Nicht-Ausstoßzeit erhöht, wie eine Schiffsgeschwindigkeit des Schiffs (1) oder eine derzeitige Drehrate des Hauptmotors (74) ansteigt.

11. Verfahren zum Steuern einer Steuerung (10), wobei das Verfahren den folgenden Schritt umfasst:
Steuern eines Ausstoßmechanismus (80) und eines Antriebsmechanismus (70) gemäß Steuerung der anderen in der Steuerung (10), die eingerichtet ist, den Ausstoßmechanismus (80), der eingerichtet ist, Blasen durch einen Luftauslass (84), der in einem Rumpf (90) eines Schiffs (1) vorgesehen ist, auszustoßen, und einen Antriebsmechanismus (70), der eingerichtet ist, den Rumpf (90) anzutreiben, zu steuern, wobei
der Ausstoßmechanismus (80) gemäß Steuerung des Antriebsmechanismus (70) gesteuert wird,
die Antriebskraft des Antriebsmechanismus (70) auf einer Grundlage eines Vergleichsergebnisses zwischen einem Befehlssignal und einem derzeitigen Signal gesteuert wird, wobei das Befehlssignal eine Größe der Antriebskraft des Antriebsmechanismus (70) befiehlt, und das derzeitige Signal eine momentane Größe der Antriebskraft anzeigt, und
eine Ausstoßmenge von Blasen erhöht wird, wenn das Befehlssignal Geschwindigkeitserhöhung anzeigt, oder die Ausstoßmenge der Blasen verringert wird, wenn das Befehlssignal Geschwindigkeitsverringerung anzeigt;
**dadurch gekennzeichnet, dass**
das Befehlssignal ein Signal ist, das eine Zieldrehrate eines Hauptmotors (74) anzeigt, der in dem Antriebsmechanismus (70) enthalten ist, und der eingerichtet ist, einen Propeller (75) zu drehen,
das derzeitige Signal eine derzeitige Drehrate ist, wobei die derzeitige Drehrate eine momentane Drehrate des Hauptmotors (74) ist,
es vorausgesagt wird, ob eine Last des Hauptmotors (74) eine vorbestimmte Last überschreitet, gemäß der Zieldrehrate, der derzeitigen Drehrate, und einer momentanen Kraftstoffeingabemenge des Hauptmotors (74), und
die Ausstoßmenge der Blasen erhöht wird, wenn vorausgesagt wird, dass die vorbestimmte Last überschritten wird.

12. Programm zum Steuern einer Steuerung (10), wobei das Programm die Steuerung (10) veranlasst, das Verfahren nach Anspruch 11 auszuführen.

## Revendications

1. Dispositif de commande (10) comprenant :
une unité de commande de bulles (20) configurée pour commander un mécanisme d'éjection (80) configuré pour éjecter des bulles dans l'eau à travers une sortie d'air (84) prévue dans une coque (90) d'un navire (1) ; et
une unité de commande de propulsion (30) configurée pour commander une force de propulsion d'un mécanisme de propulsion (70) configuré pour propulser la coque (90), dans lequel
le mécanisme de propulsion (70) comprend un moteur principal (74) configuré pour faire tourner une hélice (75),
l'une de l'unité de commande de propulsion (30) et de l'unité de commande de bulles (20) est commandée en fonction de la commande de l'autre, et
l'unité de commande de bulles (20) commande le mécanisme d'éjection (80) en fonction de la commande de l'unité de commande de propulsion (30) ;
un récepteur d'ordre (36) configuré pour recevoir un signal d'ordre ordonnant une intensité de la force de propulsion du mécanisme de propulsion (70) et un signal réel indiquant une intensité actuelle de la force de propulsion, dans lequel
l'unité de commande de propulsion (30) commande la force de propulsion du mécanisme de propulsion (70) sur la base d'un résultat de comparaison entre le signal d'ordre et le signal réel, et
l'unité de commande de bulles (20) augmente une quantité d'éjection de bulles lorsque le signal d'ordre indique une augmentation de vitesse, ou réduit la quantité d'éjection des bulles lorsque le signal d'ordre indique une réduction de vitesse ;
**caractérisé en ce que**
le signal d'ordre est un signal ordonnant un taux de rotation cible du moteur principal (74), le signal réel est un taux de rotation réel, le taux de rotation réel étant un taux de rotation actuel du moteur principal (74),
le dispositif de commande (10) comprend un prédicteur de surcharge (32) configuré pour prédire si une charge du moteur principal (74) dépasse une charge prédéterminée en fonction du taux de rotation cible, du taux de rotation réel et d'une quantité actuelle d'entrée de carburant du moteur principal (74), et l'unité de commande de bulles (20) augmente la quantité d'éjection des bulles lorsque le prédicteur de surcharge (32) prédit que la charge prédéterminée est dépassée.

2. Dispositif de commande (10) selon la revendication 1, dans lequel
l'hélice (75) est une hélice à pas variable (72) capable de modifier l'angle de pale d'une pale d'hélice (73),
le signal d'ordre est un angle de pale cible de l'hélice à pas variable (72),
le signal réel est un angle de pale réel, l'angle de pale réel étant un angle de pale actuel de l'hélice à pas variable (72), et
le prédicteur de surcharge (32) prédit, sur la base de l'angle de pale cible et de l'angle de pale réel, si la charge du moteur principal (74) dépasse la charge prédéterminée.

3. Dispositif de commande (10) selon la revendication 1, dans lequel
le dispositif de commande (10) comprend un dispositif de détermination de changement de vitesse (35) configuré pour déterminer si un ordre de changement de vitesse se situant dans une plage de taux de rotation prédéfinie a été reçu lorsqu'un taux de rotation réel actuel du moteur principal (74) est en dehors de la plage de taux de rotation, et
l'unité de commande de bulles (20) augmente la quantité d'éjection des bulles lorsque le dispositif de détermination de changement de vitesse (35) détermine que l'ordre de changement de vitesse se situant dans la plage de taux de rotation est reçu.

4. Dispositif de commande (10) selon la revendication 1, dans lequel
le dispositif de commande (10) comprend un dispositif de détermination d'accélération/décélération configuré pour déterminer s'il faut accélérer ou décélérer la coque (90) sur la base d'au moins l'un d'une quantité d'entrée de carburant dans le moteur principal (74) et d'un taux de rotation réel, et
l'unité de commande de bulles (20) exécute au moins l'une d'une première opération consistant à augmenter une quantité d'éjection de bulles lorsque l'accélération est déterminée par le dispositif de détermination d'accélération/décélération (34) et d'une seconde opération consistant à réduire la quantité d'éjection des bulles lorsque la décélération est déterminée par le dispositif de détermination d'accélération/décélération (34).

5. Dispositif de commande (10) selon la revendication 1, comprenant :
un dispositif de détermination de position (33) configuré pour acquérir un signal de position indiquant une position du navire (1) et déterminer si le navire (1) est situé dans un port sur la base du signal de position, dans lequel
l'unité de commande de bulles (20) réduit une quantité d'éjection de bulles lorsque le dispositif de détermination de position (33) détermine que le navire (1) est situé dans le port.

6. Dispositif de commande (10) selon la revendication 1, dans lequel
le dispositif de commande (10) comprend un prédicteur de charge (37) configuré pour prédire si une charge du moteur principal (74) dépasse une charge prédéterminée sur la base d'une quantité actuelle d'entrée de carburant dans le moteur principal (74) et d'un taux de rotation réel du moteur principal (74), et
l'unité de commande de bulles (20) amène le mécanisme d'éjection (80) à exécuter une opération de préparation à la génération de bulles lorsque le prédicteur de charge (37) prédit que la charge du moteur principal (74) dépasse la charge prédéterminée.

7. Dispositif de commande (10) selon la revendication 1, dans lequel
le dispositif de commande (10) comprend un récepteur de signal de limitation (38) configuré pour recevoir un signal de limite indiquant qu'une charge du moteur principal (74) dépasse une charge prédéterminée, et
l'unité de commande de bulles (20) augmente une quantité d'éjection de bulles lorsque le récepteur de signal de limitation (38) reçoit le signal de limite.

8. Dispositif de commande (10) selon la revendication 7, dans lequel le signal de limite comprend un signal de limite généré par un limiteur de couple (67) lorsqu'un couple du moteur principal (74) dépasse une valeur seuil, et un signal de limite généré par un limiteur de pression de balayage (68) lorsqu'une pression de balayage du moteur principal (74) dépasse une valeur seuil.

9. Dispositif de commande (10) selon la revendication 1, dans lequel
l'unité de commande de propulsion (30) commande le mécanisme de propulsion (70) en fonction de la commande de l'unité de commande de bulles (20), et
l'unité de commande de propulsion (30) commande le mécanisme de propulsion (70) de sorte qu'une force de propulsion cible à un moment d'éjection lorsque l'unité de commande de bulles (20) éjecte de l'air soit inférieure à une force de propulsion cible à un moment de non-éjection lorsque l'unité de commande de bulles (20) n'éjecte pas d'air.

10. Dispositif de commande (10) selon la revendication 9, dans lequel l'unité de commande de propulsion (30) augmente une largeur de diminution de la force de propulsion cible au moment de l'éjection par rapport à la force de propulsion cible au moment de non-éjection à mesure que la vitesse de navire du navire (1) ou qu'un taux de rotation réel du moteur principal (74) augmente.

11. Procédé de commande d'un dispositif de commande (10), le procédé comprenant l'étape consistant à :
commander l'un d'un mécanisme d'éjection (80) et d'un mécanisme de propulsion (70) en fonction de la commande de l'autre dans le dispositif de commande (10) configuré pour commander le mécanisme d'éjection (80) configuré pour éjecter des bulles dans l'eau à travers une sortie d'air (84) prévue dans une coque (90) d'un navire (1) et un mécanisme de propulsion (70) configuré pour propulser la coque (90), dans lequel le mécanisme d'éjection (80) est commandé en fonction de la commande du mécanisme de propulsion (70),
la force de propulsion du mécanisme de propulsion (70) est commandée sur la base d'un résultat de comparaison entre un signal d'ordre et un signal réel, le signal d'ordre ordonnant une intensité de la force de propulsion du mécanisme de propulsion (70) et le signal réel indiquant une intensité actuelle de la force de propulsion, et
une quantité d'éjection de bulles est augmentée lorsque le signal d'ordre indique une augmentation de vitesse, ou la quantité d'éjection des bulles est réduite lorsque le signal d'ordre indique une réduction de vitesse ;
**caractérisé en ce que**
le signal d'ordre est un signal ordonnant un taux de rotation cible d'un moteur principal (74) inclus dans le mécanisme de propulsion (70) et configuré pour faire tourner une hélice (75), le signal réel est un taux de rotation réel, le taux de rotation réel étant un taux de rotation actuel du moteur principal (74),
il est prédit si une charge du moteur principal (74) dépasse une charge prédéterminée en fonction du taux de rotation cible, du taux de rotation réel et d'une quantité actuelle d'entrée de carburant dans le moteur principal (74), et
la quantité d'éjection des bulles est augmentée lorsqu'il est prédit que la charge prédéterminée est dépassée.

12. Programme de commande d'un dispositif de commande (10), le programme amenant le dispositif de commande (10) à exécuter le procédé selon la revendication 11.
